# EUROPEAN PATENT SPECIFICATION

(11) **EP 0 491 958 B1**
(45) Date of publication and mention of the grant of the patent: **04.10.1995**
(21) Application number: 91911367.0
(22) Date of filing: 19.06.1991
(51) Int. Cl.: B23H 1/02, B23H 7/20, B23H 3/02

(54) **METHOD AND APPARATUS FOR GENERATING PULSES**
VERFAHREN UND GERÄT ZUR GENERIERUNG VON PULSEN
PROCEDE ET APPAREIL DE GENERATION D'IMPULSIONS

(30) Priority: 13.07.1990 JP 185743/90
(43) Date of publication of application: 01.07.1992
(73) Proprietor: SODICK CO., LTD., Yokohama-shi, Kanagawa 222 (JP)
(72) Inventor: TAKAHARA, Kunihiro, Sakai-gun, Fukui 919-05 (JP)
(74) Representative: Enskat, Michael Antony Frank
(86) International application number: PCT/JP91/00823
(87) International publication number: WO 92/00826

(56) References cited:
- FR-A- 2 443 712
- GB-A- 2 166 269
- JP-A- 5 789 523
- JP-A-59 169 717

## Description

### (Technical Field)

This invention relates to a device for generating electric machining pulses in a power supply device for electric machining in the electric discharge machining apparatus, the electrolytic machining apparatus, etc.

### (Conventional Technology)

In the conventional power supply device for electric machining, ON time and OFF time of the electric machining pulse are preset, on which the pulse generator generates the electric machining pulses successively.

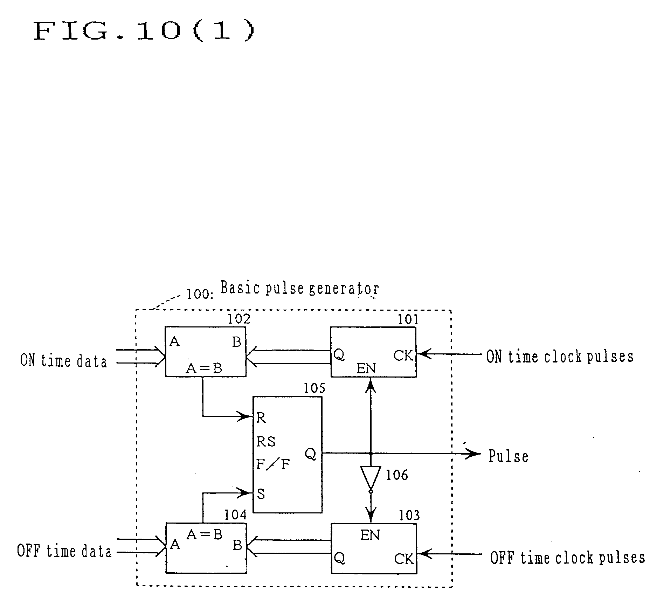

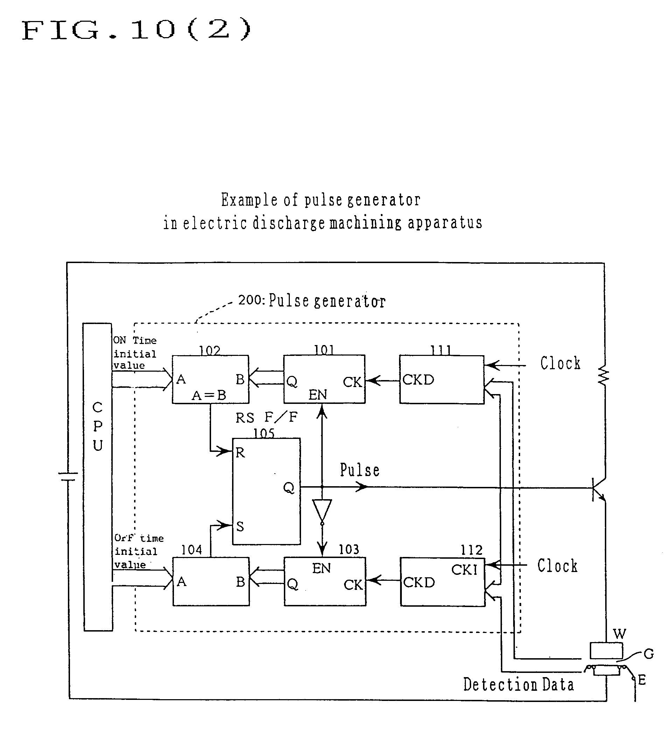

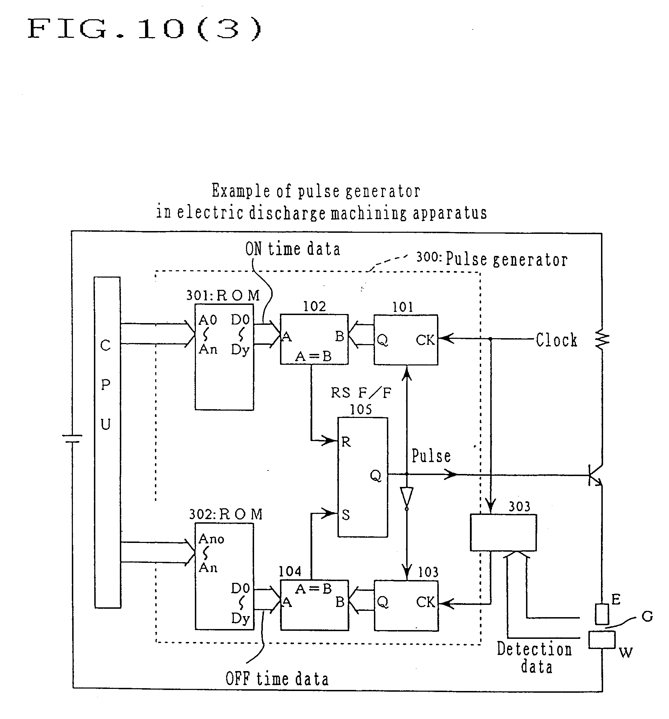

Fig 10 (1) is a circuit diagram of the conventional basic pulse generator.

In this basic pulse generator 100, the counter 101 counts ON time clock pulses, and its count is compared with ON time data (data specifying ON time as length) by the comparator 102. When both are identical, the comparator 102 sends the identification signal, which is used to reset the RS flip-flop 105. On the other hand, the counter 103 counts OFF time clock pulses, and its count is compared with OFF time data (data specifying OFF time as length) by the comparator 104. When both are identical, the comparator 104 sends the identification signal, which is used to set the RS flip-flop 105. Output signal of the flip-flop 105 is used as a signal to enable the counter 101 and the output signal of the flip-flop 105 is inverted by the inverter 106 to be used as a signal to enable the counter 103.

Thus, when time specified with OFF time data elapses, the OFF time counter 103 stops counting, the ON time counter 101 starts counting and output pulse of the RS flip-flop 105 is turned ON. When time specified with ON time data elapses, the ON time counter 101 stops counting, the OFF time counter 103 starts counting, and output pulse of the RS flip-flop 105 is turned OFF. With this operation repeated, output signal of the flip-flop 105 becomes output pulse of the pulse generator 100.

Fig 10 (2) shows a circuit diagram of the above conventional pulse generator used in the electric discharge machining apparatus.

Components same as those described above are shown with same numbers but their description is omitted hereafter.

In the pulse generator 200 based on the above pulse generator 100, its ON time clock pulses are generated in the divider 111 and its OFF time clock pulses are generated in the divider 112, and initial value of ON time and initial value of OFF time are provided by CPU. According to detection data (gap voltage signal) sent from the gap G formed between the workpiece W and the electrode E, dividers 111 and 112 divide the respective clock pulses. ON time and OFF time are controlled by means of the respective divided clock pulses.

Fig. 10 (3) shows a conventional circuit diagram of the above pulse generator to control OFF time only.

The pulse generator 300 is provided with ROM 301 and 302 between CPU and comparator 102 and 104. ROM 301 selects ON time data to be sent to the comparator 102, depending on the initial value of ON time while ROM 302 selects OFF time data to be sent to the comparator 104, depending on the initial value of OFF time. The divider 303 divides the clock pulses according to detection data and sends divided clock pulses to the OFF time counter 103.

In the conventional pulse generators shown in Fig. 10 (2) and (3), comparators 102 and 104 send output signals depending on initial values of ON time and OFF time and output signals of counters 101 and 103. Depending on these output signals, the flip-flop 105 generates a pulse having a specified pulse width.

In the above conventional example, required designations as to which data is to be selected for evaluation and analysis machining (which data is to be selected as detection data), and how to evaluate and analyze selected detection data (how to diagnose machining state and output ON time data and OFF time data on the basis of the diagnosis result), however, are implemented in a dedicated circuit.

Depending on the kind of the electric machining method, hardware configuration differs and the volume of hardware which can be accommodated in a single IC is limited. This makes difficult to create an IC compatible with all or multiple electric machining methods and to make a hardware common to multiple electric machining methods.

Further, when making both rough machining and finish machining, it is desirable to establish different criteria in determining acceptance of the voltage across a gap formed between an electrode and a workpiece. In the past, however, hardware configuration for rough and finish machining was made common to follow a policy to make the hardware configuration common as far as possible. Therefore, it is restricted to select and output the data of ON time and OFF time of pulse according to machining state.

Additionally, in the electrical discharge machining, arc voltage is normally 10 to 15V for copper-titanium machining and 20 to 25V for copper-steel machining. In case that the pulse control method for copper-titanium machining is applied to copper-steel machining, even normal machining state is decided as abnormal discharging so that pulse is controlled excessively and the OFF time is shortened to a value smaller than required, preventing progress of the machining. In short, failure decision criteria depends on the combination of electrode and workpiece material, and this makes it difficult to decide properly whether discharging state is abnormal.

Further, in the copper-steel and copper tungsten-steel machining, the τw time (time when no discharge takes place even with voltage applied across a gap) in cutting through hole with the help of fluid flushing is different from that in cutting bottom-closed cavity. In short, in cutting bottom-closed cavity, short τw causes abnormal discharging and chips residing. This prevents deionization and subsequent electric discharges. On the other hand, in cutting through hole with the help of fluid flushing, short τw causes no problem. Consequently, when ON time and OFF time of pulse are controlled by detecting the τw time, designation of control method for cutting through hole is likely to cause abnormal discharging in cutting bottom-closed cavity, while designation of control method for cutting bottom-closed cavity prevents progress of machining in cutting through hole due to excessive pulse control.

The above problems occur on controlling the ON time data and OFF time data of pulse but also on controlling of the peak current Ip data of pulse.

FR-A-2443712 discloses a microprocessor - controlled electrical discharge machining system adapted to optimally perform a plurality of control operations, wherein machining parameters such as machining pulse on-time and off-time are controlled. However, only a fixed set of criteria are used to process signals indicative of electrical machining performance.

GB-A-2166269 discloses a method of, and an apparatus for, controlling an electric discharge machine, wherein the off-time is controlled in dependence upon the conditions in the working gap. A fixed (not programmable) logic circuit is used to process data to control the machine.

JP-A-59-169717 discloses an apparatus for changing the setting of machining conditions using a predetermined program. Machining conditions including electrical characteristics such as polarity, peak current and ON and OFF times of a machining pulse are changed when process information, such as required surface roughness, required material removal rate and required dimensional accuracy, is changed. In one example, seven sets of machining conditions are set, according to different process requirements.

JP-A-57-89522 discloses an electric discharge machining apparatus capable of automatically setting machining pulse conditions using a program controller. This selects conditions, such as pulse current, pulse width duty cycle or working fluid pressure, to meet required conditions such as required surface roughness, workpiece material, etc. Optimised values are stored for parameters such as conditions such as fluid pressure, pulse current, etc and on the basis of these machining conditions are automatically obtained. The process does not adaptively change pulse generating conditions.

An object of the present invention is to provide a pulse generator for electric machining in which ON time, OFF time and peak current of pulse can be changed with much flexibility, in which optimum evaluation and analysis of detection data is made according to the progress of machining, in which hardware on pulse control can be used in common irrespective of electrical machining methods such as diesinking electric discharge machining, wire-cut electric discharge machining, electrolytic machining etc. and in which an abnormal discharging state is properly decided even when the decision criterion of abnormal discharging should be changed due to different electrode and workpiece materials.

### (Disclosure of Invention)

According to the present invention there is provided a method for generating a train of successive pulses for effecting a process, wherein a processing means stores a plurality of sets of pulse generating conditions and sets one of the plurality of sets of pulse generating conditions each time a set of process information required for carrying out said process is received, and wherein a detector generates a detection data signal indicative of the condition of at least one characteristic of the process to which said pulses are applied, characterized by the steps of:
(i) storing a plurality of sets of initial ON time values, initial OFF time values and program data including diagnostic criteria for processing said detection data signal and ON time/OFF time calculation criteria;
(ii) inputting a set of the process information required for carrying out said process to said processing means;
(iii) outputting one of the plurality of sets of initial ON time values, initial OFF time values and program data from said processing means, to a pulse generating device;
(iv) generating a pulse having an ON time set in accordance with said initial ON time value and an OFF time set in accordance with said initial OFF time value;
(v) providing said detection data signal to said pulse generating device;
(vi) processing said detection data signal in accordance with said program data including said diagnostic criteria to thereby generate a diagnostic signal;
(vii) varying the duration of ON time from said initial ON time value or the duration of OFF time from said initial OFF time value responsive to said diagnostic signal using said program data including said ON time/OFF time calculation criteria; and
(viii) generating a pulse in accordance with varied said ON time duration and said OFF time duration.

According to the invention in a second aspect there is provided a pulse generating apparatus comprising a pulse generating device for generating a train of successive pulses having an ON time and an OFF time, said pulses being applied to effect a process, a processing means having means for storing a plurality of sets of initial ON time values, initial OFF time values and means for providing one of the plurality sets of initial ON time values and initial OFF time values each time a set of process information required for carrying out the process is received, and a detector for generating a detection data signal indicative of the condition of at least one characteristic of the process to which said pulses are applied, characterised in that: said processing means further stores a plurality of sets of program data including diagnostic criteria for processing said detection data signal and ON time/OFF time calculation criteria and further provides one of the plurality of sets of program data each time a set of the process information is received, and wherein said pulse generating device comprises: means for storing one of the plurality of sets of initial ON time values, initial OFF time values and program data from said processing means; programmable means for processing said detection data signal in accordance with said program data, including said diagnostic criteria, to thereby generate a diagnostic signal; programmable means, responsive to said diagnostic signal, for varying the duration of said ON time from said initial ON time value and/or the duration of said OFF time from said initial OFF time value in accordance with said program data, including said ON time/OFF time calculation criteria; and pulse generating means, responsive to said programmable means for varying ON time and OFF time, for generating a pulse having an ON time and an OFF time.

### (Brief Description of Drawings)

Fig. 1 is a block diagram showing one embodiment of the invention.

Fig. 2 is a drawing showing diagnosis unit 20 and ON/OFF time calculation means 30 in the above embodiment.

Fig. 3 (1) to (4) shows examples of program data, etc. in the above embodiment.

Fig. 4 (1) to (10) show circuit diagrams detailing key components in the above embodiment.

Fig. 5 shows the flowchart of the above embodiment.

Fig. 6 is a time chart showing the generating process of check pulse, inhibit signal and F-signal and B-signal inside decision means 25, for electric discharge machining in the above embodiment.

Fig. 7 is a time chart showing operation of ON time control decision means 50 for electric discharge machining in the above embodiment.

Fig. 8 is a time chart showing an example of ON time control in ON/OFF time calculation means 30 in the above embodiment.

Fig. 9 (1) and (2) illustrate an example of data setting in the logic circuit for the pulse width change shown in Fig. 2.

Fig. 10 shows conventional pulse generators.

Fig. 11 is a block diagram showing the additional embodiment provided with the function to control the peak current Ip in the embodiment shown in Fig. 1.

Fig. 12 (1) to (3) shows examples of program data added for controlling the peak current Ip.

Fig. 13 (1) and (2) are circuit diagrams respectively showing an example of detection data selection means 21i and check pulse generation means 23i, Fig. 13 (3) is a circuit diagram showing an example of the switching circuit in the additional embodiment in which the peak current Ip can be controlled as well.

### (Best Mode of Invention)

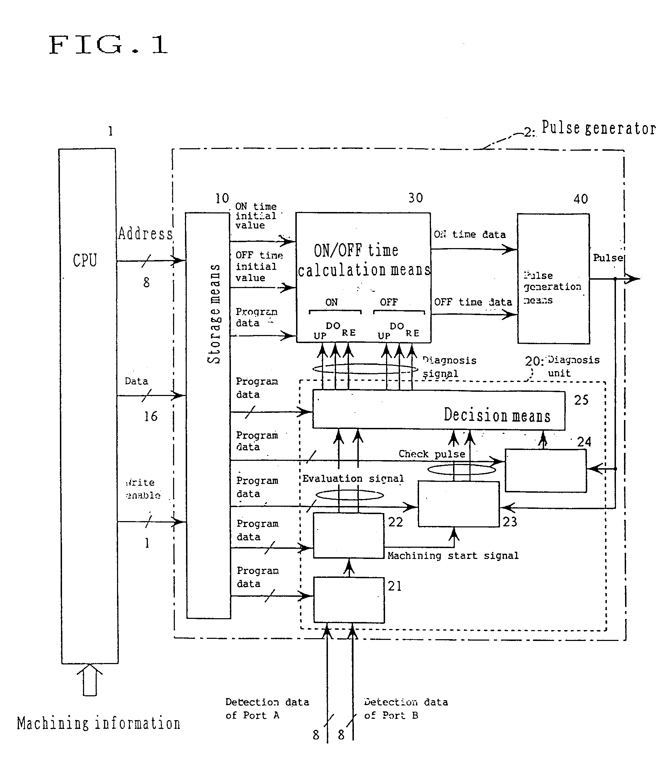

Fig. 1 is a block diagram showing an embodiment of the present invention.

In this embodiment, the pulse generator 2 is used for electric machining in electric discharge machining apparatus, electrolytic machining apparatus and etc., having storage means 10 for storing data from external device, diagnosis unit 20 for diagnosing machining state by evaluating detection data in the gap, ON/OFF time calculation means 30 which can change the logic circuit for changing the pulse width based on diagnosis results with program data and pulse generation means 40 for generating electric machining pulses successively.

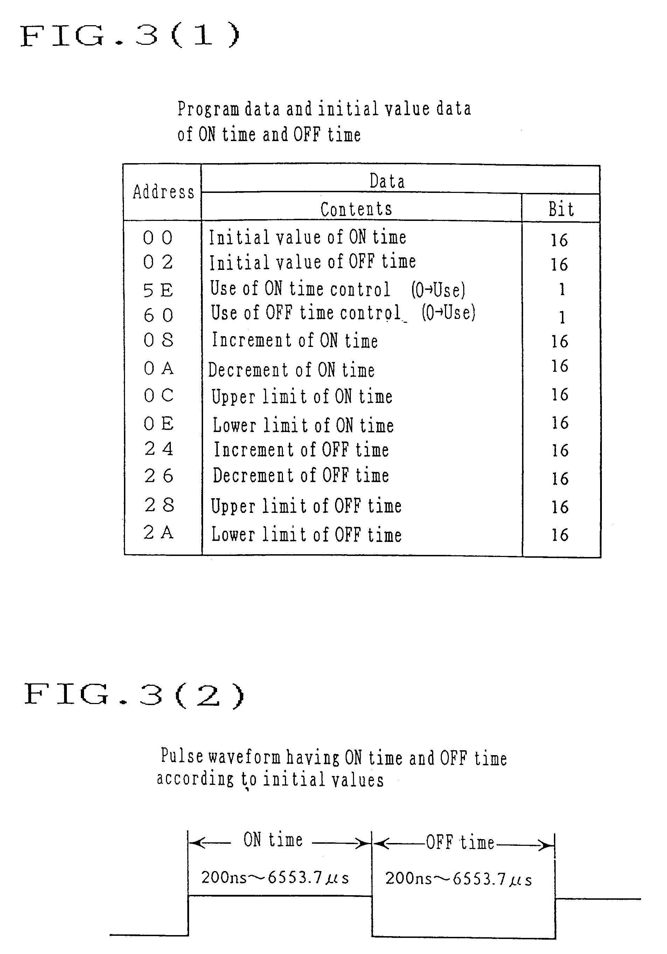

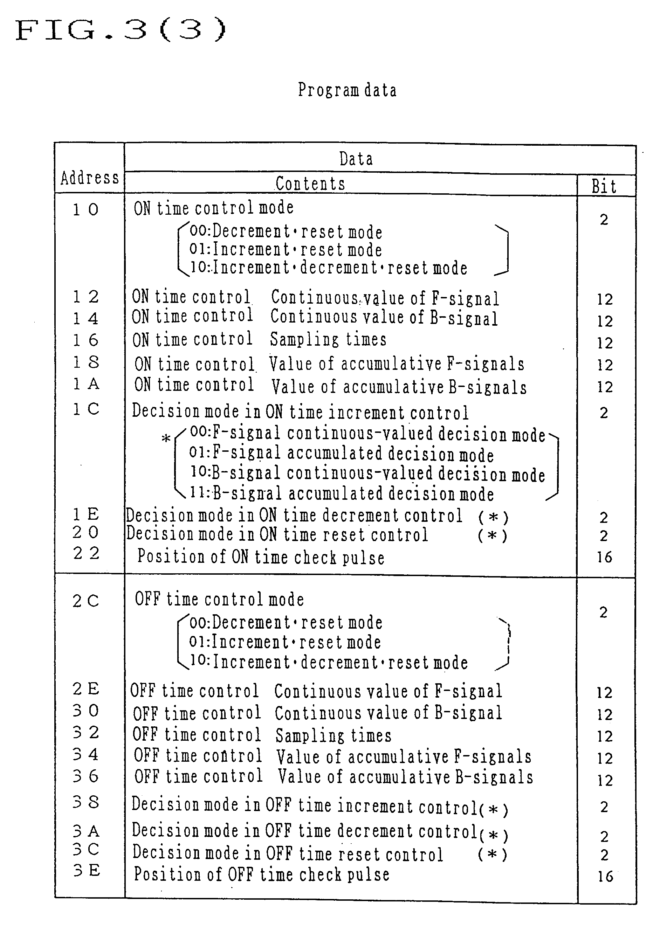

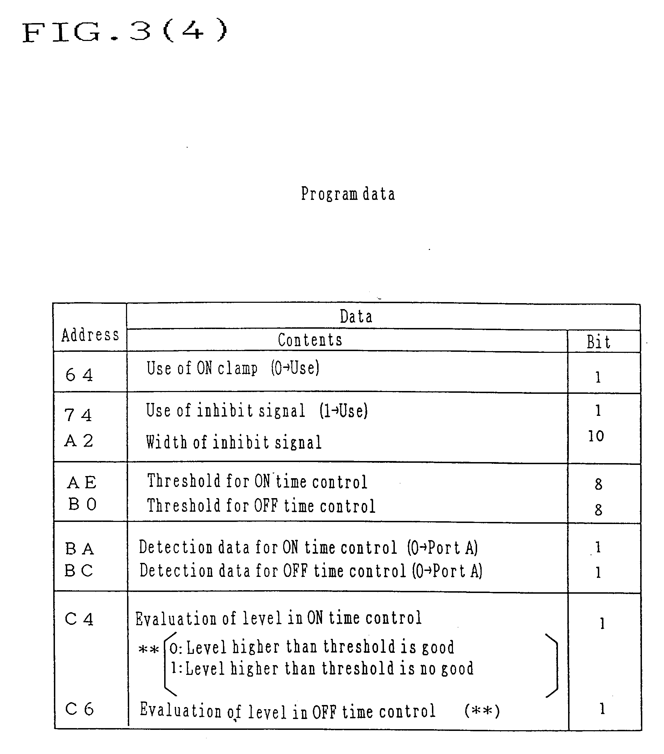

The pulse generator 2 receives receives address, data and write enable signal from CPU 1 (e.g., 87C196KB available from INTEL) and detection data from sensors to provide pulse waveform corresponding to the detection data. Definite example of the address and corresponding data is shown in Fig. 3. The pulse generator 2 is provided with storage means 10, diagnosis unit 20, ON/OFF time calculation means 30 and pulse generation means 40, and the diagnosis unit 20 is provided with detection data selection means 21, threshold setting means 22, check pulse generation means 23, inhibit signal generation means 24 and decision means 25.

Storage means 10 comprise multiple registers which store initial value of On time, initial value of OFF time and program data from CPU 1 when receiving write enable signal.

Detection data selection means 21 selects one of multiple detection data entered from outside of the pulse generator 2. The detection data shows the information on machining state.

Threshold setting means 22 set a threshold (detection criterion value) of detection data selected as above and provide an evaluation signal which indicates good (or no good) when detection data is larger than the threshold.

Check pulse generation means 23 control timing from a given position, for example, rising edge of gate signal to positions where ON time check pulse and OFF time check pulse are generated respectively so as to generate ON time check pulse and OFF time check pulse which show positions for extracting the evaluation signal.

Inhibit signal generation means 24 generates inhibit signal which inhibits extracting the evaluation signal for a specified duration from rising edge of gate signal.

Decision means 25 generate diagnosis signals for ON time control and OFF time control independently indicating diagnosis results based on the evaluation signal, check pulse and inhibit signal.

ON/OFF time calculation means 30 provide ON time data and OFF time data based on diagnosis signal.

Pulse generation means 40 generate electric machining pulses successively according to ON time data and OFF time data.

In the above embodiment, all of detection data selected by detection data selection means 21, threshold set by threshold setting means 22, the duration of inhibit set by inhibit signal generation means 24, check pulse generation timing set by check pulse generation means 23, diagnosis signal by decision means 25 and the data of ON time and OFF time provided by ON/OFF time calculation means 30 are programmable.

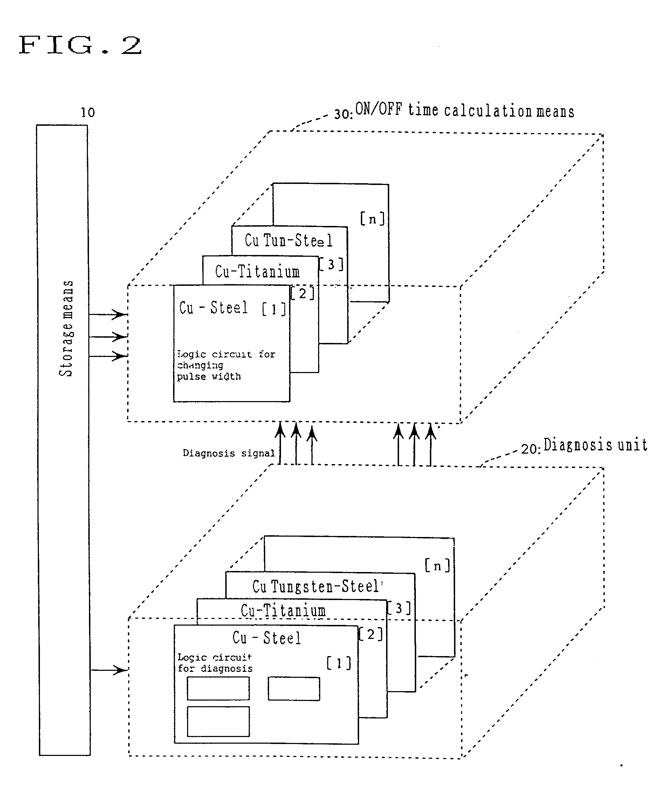

Fig. 2 shows diagnosis unit 20 and ON/OFF time calculation means 30 in the above embodiment.

Though diagnosis unit 20 is virtually a single logic circuit for diagnosing, in view of function it is provided with multiple logic circuits such as logic circuit for diagnosing copper-steel machining, that for diagnosing copper-titanium machining, that for diagnosing copper tungsten-steel machining as shown Fig. 2 and one of these logic circuits is selected according to the setting of program data. Also, though ON/OFF time calculation means 30 is virtually a single logic circuit for changing the pulse width, in view of function it is provided with multiple logic circuits as shown in Fig. 2 and one logic circuit is selected according to the setting of program data.

Therefore, the pulse generator 2 contains various combinations of the logic circuit for diagnosing and the logic circuit for changing the pulse width in spite of a single circuit configuration, and one of optimum combination can be selected according to machining information.

Fig. 3 (1) illustrates an example of initial values of ON time and OFF time and program data sent to ON/OFF time calculation means 30 from CPU 1 through storage means 10 in the above embodiment.

The above "Program data" is data which CPU sets on the basis of machining information. The above "Machining information" covers the electric machining methods, workpiece materials, electrode materials, characteristics of machining fluid, state of fluid flushing and operator's requests. The above "Operator's requests" include surface roughness, removal rate and electrode ware rate. Operator may set the desired machining information at the start of the machining and change it in the progress of the machining or may program so that such machining information is changed with the progress of the machining. Operator may set initial values of ON time and OFF time at the start or in the progress of the machining and it can be handled as one of program data being set in accordance with machining data.

In program data shown in Fig. 3 (1), program data associated with Address 00 _{HEX} is a 16-bit setting of initial value of ON time and data associated with Address 02 _{HEX} is a 16-bit setting of initial value of OFF time.

Other program data is provided to set the increment, the decrement, the upper limit, the lower limit and presence or absence of ON time control of the pulse generated by the pulse generator 2. For example, data associated with Address 08 _{HEX} is a 16-bit setting of the increment of ON time, and data associated with Address 24 _{HEX} is a 16-bit setting of the increment of OFF time. 1-bit data associated with Address 5E _{HEX} is a setting of control effectiveness of ON time Turning the bit to "0" sets execution of ON time controls, while turning it to "1" sets non-execution of ON time controls. Other program data is set similarly.

Fig. 3 (2) shows an example of pulse waveforms generated by pulse generation means 40 with ON time and OFF time according to the initial values. Initial values of ON time and OFF time may be selected in 100ns within the range of 200ns to 6553.7/µs, although they may be selected in a different time unit in different time range by modifying the clock signal generator (not shown) which sends clock pulses to the pulse generator 2.

Fig. 3 (3) and (4) show an example of program data transferred from CPU 1 to diagnosis unit 20 through storage means 10 in the above embodiment.

Program data shown in Fig. 3 (3) is provided to set control mode, continuous-value of F-signal, continuous-value of B-signal, sampling times in accumulated value decision mode, value of accumulative F-signals, value of accumulative B-signals, decision mode in the increment control, decision mode in the decrement control, decision mode in the reset control and check pulse position.

The next paragraph details the settings shown in Fig. 3 (3).

Program data associated with Address 10 _{HEX} is "Setting of ON time control mode", in which "Control" consists of "Increment control", "Decrement control" and "Reset control", "Control mode" comprises the combinations of above three controls. The "Increment control" increases a present ON time by a specified time interval. The "Decrement control" decreases a present ON time by a specified time interval. The "Reset control" resets a present ON time to initial condition.

Program data "00", "01" and "10" associated with Address 00 _{HEX} respectively indicate the setting of "ON time decrement and reset mode" as a combination of the decrement control and the reset control in controlling ON time, the setting of "ON time increment and reset mode" as a combination of the increment control and the reset control and "ON time increment, decrement and reset mode" as a combination of the increment control, decrement control and reset control.

Program data associated with Address 1C_{HEX} , 1E_{HEX} and 20 _{HEX} is setting of decision mode each in the ON time increment, decrement and reset controls. This decision mode consists of "F-signal continuous-valued decision mode", "F-signal accumulating decision mode", "B-signal continuous-valued decision mode" and "B-signal accumulating decision mode".

In the above embodiment, "F-signal" is provided to indicate the good when the value of detection data is larger than the threshold while "B-signal" is provided to indicate no good when the value of detection data is smaller than the above threshold.

The F-signals and B-signals are generated inside decision means 25 according to evaluation signal from threshold setting means 22, check pulse from check pulse generation means 23 and inhibit signal from inhibit signal generation means. Therefore, they may have wider meaning than in the above embodiment. For example, F-signal indicative of good may be provided when the value of detection data is smaller than the threshold or otherwhile. Similarly, the B-signal indicative of no good may be provided when the value of detection data is larger than the threshold or otherwhile.

In setting of program data associated with Address 1C_{HEX} , for instance, the above "F-signal continuous-valued decision mode" is a mode to increase ON time when continuous F-signals reach a specified value, and the above "B-signal continuous-valued decision mode" is a mode to increase ON time when continuous B-signals reach a specified value. Also, in setting of program data associated with Address 1C_{HEX} for instance, the above "F-signal accumulating decision mode" is a mode to increase ON time when according to the ratio between occurrence times and sampling times of F-signal and the above "B-signal accumulating decision mode" is a mode to increase ON time when according to the ratio between occurrence times and sampling times of B-signal

Setting "00", "10", "01" and "11" as data associated with Address 1C_{HEX} selects "F-signal continuous-valued decision mode", "B-signal continuous-valued decision mode", "F-signal accumulating decision mode" and "B-signal accumulating decision mode"

Also, setting data associated with Address 1E_{HEX} and Address 20 _{HEX} can select "F-signal continuous-valued decision mode", "B-signal continuous-valued decision mode", "F-signal accumulating decision mode" and "B-signal accumulating decision mode" about increment control of ON time and decrement control of ON time, respectively.

Setting data associated with Address 12_{HEX} , Address 14 _{HEX} , Address 16_{HEX} sets the continuous value of F-signal, the continuous value of B-signal and the sampling times in accumulating decision mode, respectively.

Setting of 16-bit data associated with Address 22 _{HEX} selects position of the check pulse for ON time control. This check pulse specifies position for extracting the evaluation signal by taking the timing from the rising edge of gate signal to the position where check pulse for ON time control is generated.

Setting data associated with addresses 2C _{HEX} through 3E_{HEX} selects parameters for OFF time control similarly with those for ON time control.

Program data shown in Fig. 3 (4) is used to set the threshold, selection of detection data and the evaluation of value larger than the threshold respectively in ON time control and OFF time control as well as use or non-use of ON clamp operation, use or non-use of inhibit signal and the width of inhibit signal. When ON clamp operation is used, check pulse is generated after a given time period from the falling edge of machining start signal instead of the rising edge of gate signal. Machining start signal is a signal which indicates the start of electric machining, for example, by detecting the voltage drop across the gap formed between the electrode and the workpiece.

The next paragraph details settings of program data shown in Fig. 3 (4).

Setting 8-bit data associated with Address AE _{HEX} to a given value selects a desired threshold for ON time control. Setting of 1-bit data associated with Address BA _{HEX} to "0" selects detection data of Port A for ON time control, setting this data to "1" selects detection data of Port B for ON time control. When 1-bit data associated with Address C4 _{HEX} is set to "0" , value larger than the threshold indicates good, while when this data is set to "1", value larger than the threshold indicates no good.

The above setting procedures for ON time control are also available to program data for OFF time control.

In addition, setting 1-bit data associated with Address 64 _{HEX} to "0" and "1" selects use and non-use of the ON clamp, respectively. Setting 1-bit data associated with Address 74 _{HEX} to "0" and "1" selects use and non-use of the inhibit signal, respectively. Setting 10-bit data associated with Address A2 _{HEX} to a given value sets a desired duration of the inhibit signal.

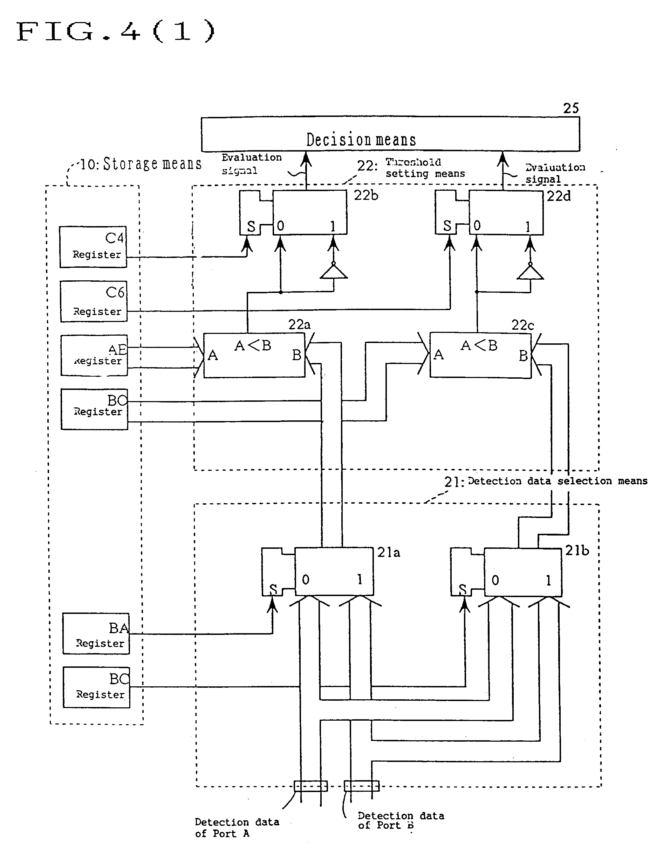

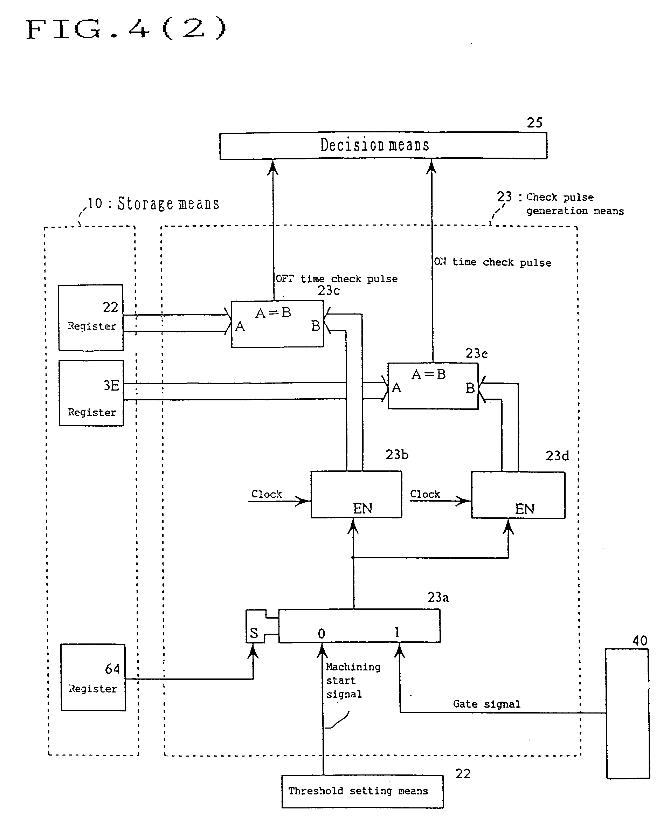

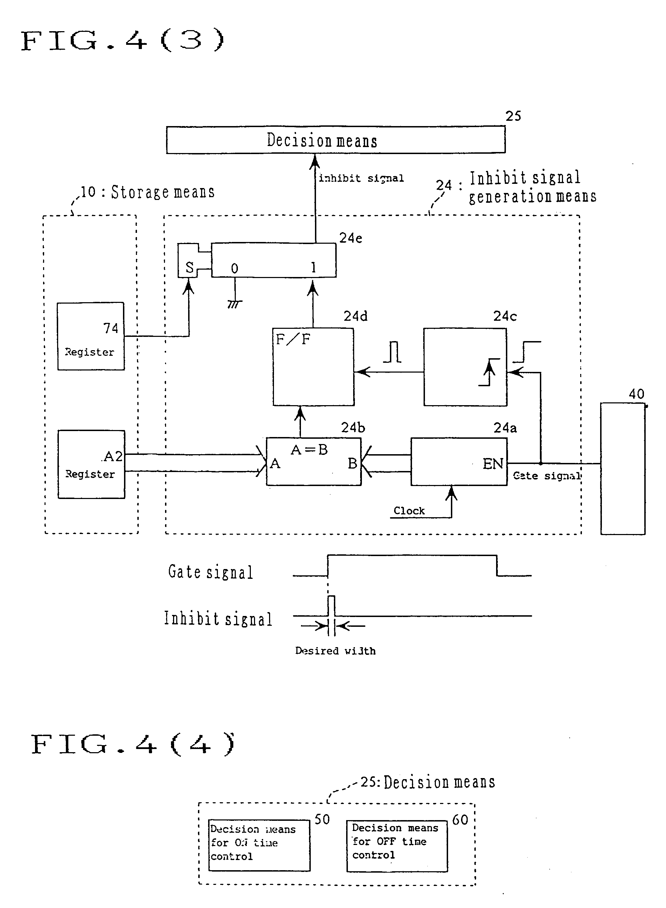

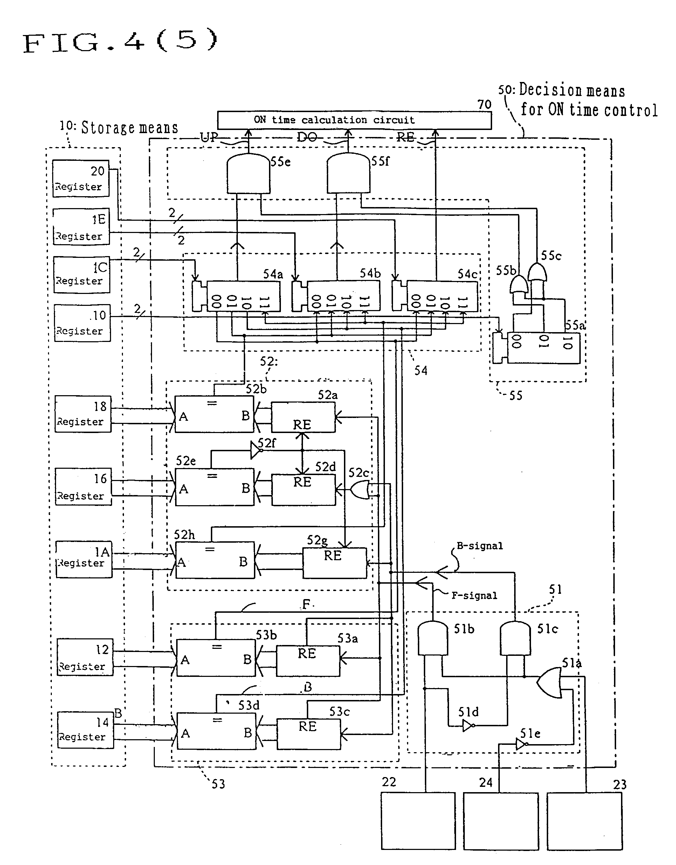

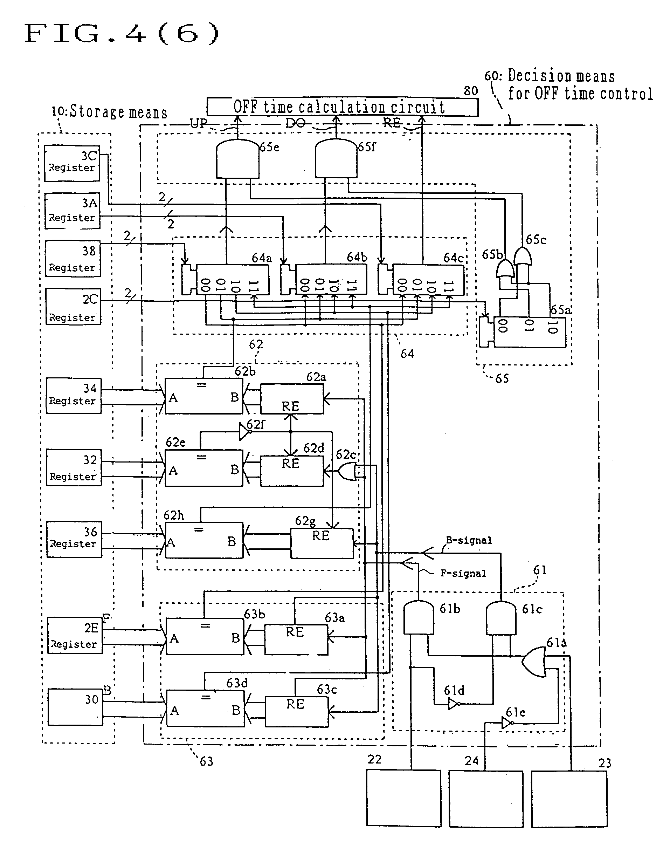

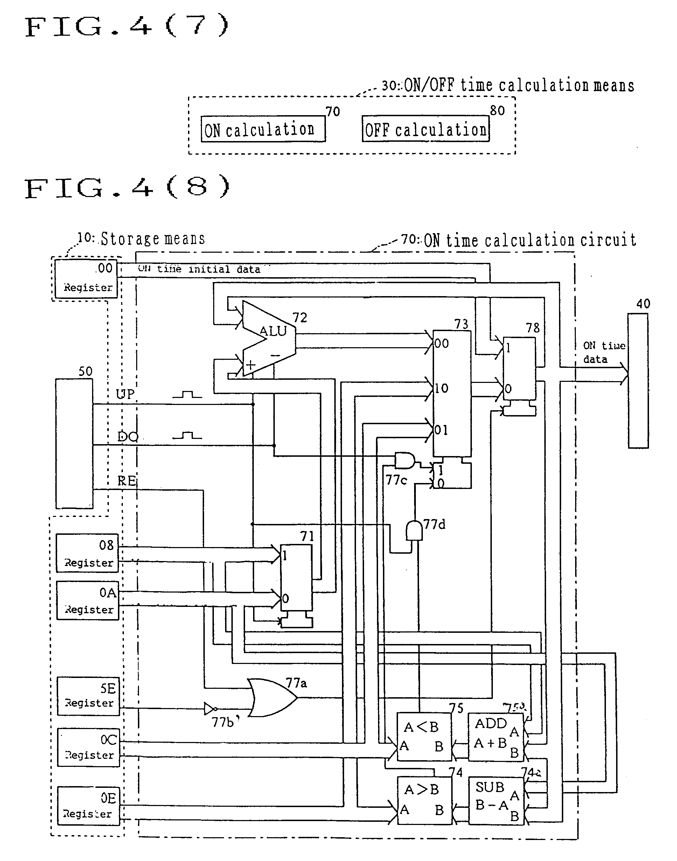

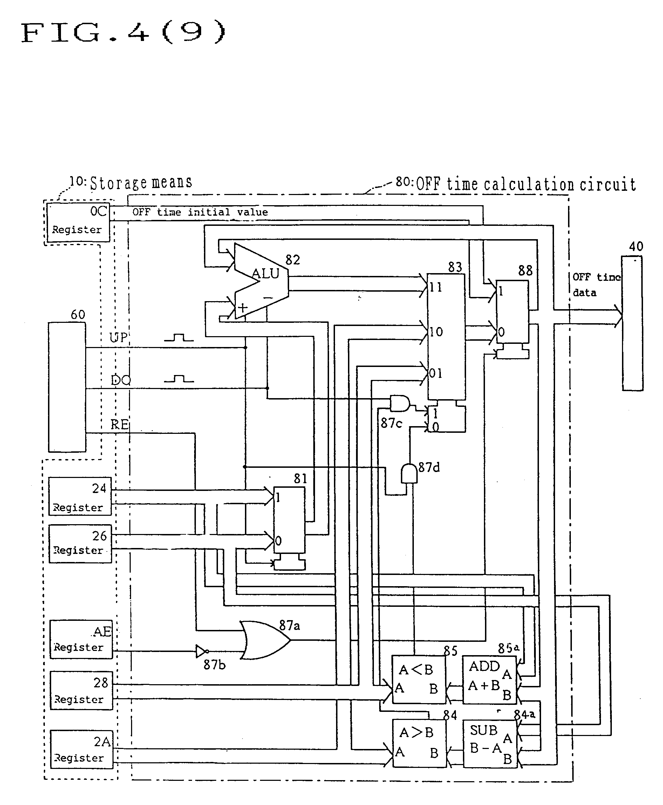

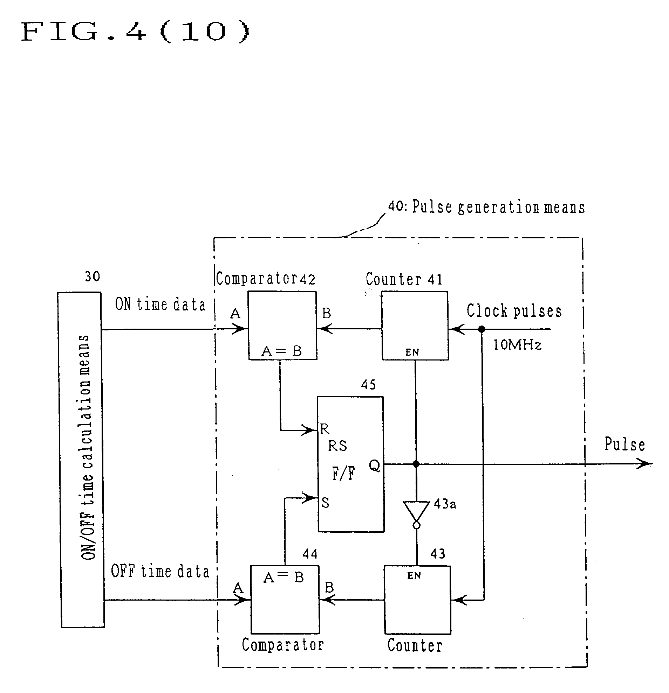

Fig. 4 is a circuit diagram showing an example of the detection data selection means 21 and threshold setting means 22 in the above embodiment.

Detection data selection means 21 consists of selectors 21a and 21b. The selector 21a selects and provides detection data at Port A or Port B for ON time control according to data (select signal) associated with Address BA _{HEX} in the program data shown in Fig. 3 (4).

Ports A and B are input terminals which receive detection data indicative of machining state.

The selector 21b selects and provides detection data at Port A or Port B for ON time control according to data (select signal) associated with Address BC _{HEX} in the program data shown in Fig. 3 (4). If select signals are "0" and "1", the selector 21b provides detection data at Port A and detection data at Port B, respectively.

When the above embodiment is applied to an electric discharge machining apparatus, for instance, detection data at Port A may be a gap voltage signal in the gap formed between the electrode and the workpiece, and detection data at Port B may be a gap current signal. The gap voltage signal at Port A is a digital signal converted by an A/D converter (not illustrated) with lower limit value of 1V. The gap voltage signal may be selected for either the ON time control and OFF time control.

Though the detection data selection means 21 shown in Fig. 1 and Fig. 4 (1) has two input terminals of Port A and Port B, at least one input terminal may be added to receive additional detection data as signals indicative of detection information such as temperature of machining fluid, machining frequency in electric machining, high frequency component in electric discharge and brightness, color tone and sound of electric spark. More than two detection data may be taken simultaneously to generate more than two evaluation signals. Such configuration can be easily implemented by preparing required number of threshold setting means and address registers.

In the above configurations, each desired signal of detection data for ON time control and OFF time control can be selected independently through a single hardware (detection data selection means 21).

In Fig. 4 (1), threshold setting means 22 is provided with comparators 22a and 22c and selectors 22b and 22d.

The comparator 22a compares detection data (in the above embodiment, gap voltage) sent from the detection data selection means 21 with a threshold (data associated with Address AE _{HEX} ) for ON time control and then provides "1" when value of the detection data is larger than the threshold. The comparator 22c compares detection data (in the above embodiment, gap voltage) with a threshold (data associated with Address B0 _{HEX} ) for OFF time control and then provides "1" when value of the detection data is larger than the threshold.

The selector 22b provides an "1" state evaluation signal indicative of good or a "0" state evaluation signal indicative of no good according to data associated with Address C4 _{HEX} when gap voltage is larger than a threshold for ON time control.

The selector 22d provides an "1" state evaluation signal indicative of good or a "0" state evaluation signal indicative of no good according to data associated with Address C6 _{HEX} when gap voltage is larger than a threshold for ON time control.

In the above configurations, each desired threshold on detection data and each desired evaluation on detection data for ON time control and OFF time control can be selected independently through a single hardware (threshold setting means 22).

Fig. 4 (2) is a circuit diagram showing an example of check pulse generation means 23 in the above embodiment.

Check pulse generation means 23 receives gate signal (output pulse provided by pulse generation means 40) and machining start signal (output pulse provided by threshold setting means 22) to select either of them according to ON clamp data associated with Address 64 _{HEX} . When ON clamp operation is selected, the data is set to "0" and the selector 23a provides the machining start signal. When ON clamp operation is not selected, the data is set to "1" and the selector 23a provides the gate signal. Counters 23b and 23d start counting of clock pulses when signal sent from the selector 23a turns to "1".

The comparator 23c provides the check pulse for ON time control when the count of the counter 23b becomes identical with position data (data associated with Address 22 _{HEX} ) of the check pulse for ON time control. The comparator 23e provides the check pulse for OFF time control when the count of the counter 23b becomes identical with position data (data associated with Address 3E_{HEX} ) of the check pulse for OFF time control.

In the above configurations, each desired position data for ON time control and OFF time control can be set independently through a single hardware (check pulse generation means 23), and the control with ON clamp and without ON clamp can be selected.

Fig. 4 (3) is a circuit diagram showing an example of inhibit signal generation means 24 in the above embodiment.

Inhibit signal generation means 24 contains the counter 24a, comparator 24b, differentiating circuit 24c with an one-shot multivibrator, RS flip-flop 24d and selector 24e. The counter 24a starts counting clock pulses when gate signal sent from the pulse generation means 40 is turned "1" and is reset when the gate signal is turned "0". The comparator 24b provides "1" when the count of the counter 24a becomes identical with the width of inhibit signal (data associated with Address A2 _{HEX} ). The inhibit signal inhibits the operation for extracting the evaluation signal for its width. This inhibit signal makes the check pulse ineffective for the duration when the gate signal reaches a given value from its rising edge. As a result, reliability of diagnosing the machining state is increased.

The differentiating circuit 24c provides one pulse when the gate signal is turned ON. The RS flip-flop 24d is set when receiving a pulse sent from the differentiating circuit 24c and is reset when receiving "1" sent from comparator 24b. Selector 24e sends inhibit signal to decision means 25 only when data associated with Address 74 is "1".

In the inhibit signal generation means 24 described above, the inhibit signal is generated from rising edge of the gate signal as noted at bottom of Fig. 4 (3) and the desired width of the signal can be selected.

Fig. 4 (4) shows that decision means 25 consists of ON time control decision means 50 and OFF time control decision means 60.

Fig. 4 (5) is a circuit diagram showing an example of the ON time control decision means 50 in the above embodiment.

The ON time control decision means 50 contains the F/B signal generator 51 which generates F-signal and B-signal, accumulation value signal generator 52, which generates F accumulation signal and B accumulation signal, F/B continuous-value signal generator 53 which generates F continuous-value signal and B continuous-value signal, the select circuit 54 and UP/DO/RE signal generator 55 which generates UP, DO and RE signals as the diagnosis signals.

The "F accumulation signal" is provided when occurrence times of F-signal reach a given value. The "B accumulation signal" is provided when occurrence times of B-signal reach a given value. The "F continuous-value signal" is provided when a given series of F-signals are generated continuously. The "B continuous-value signal" is provided when a given series of B-signals are generated continuously.

The "UP signal" increases ON or OFF time. The "DO signal" decreases ON or OFF time. "RE signal" return ON time or OFF time to respective initial value.

The F/B signal generator 51 contains the OR circuit 51a, AND circuits 51b and 51c and inverters 51d and 51e. The generator 51 provides F-signal or B-signal on the basis of the evaluation signal sent from threshold setting means 22, check pulse sent from check pulse generation means 23 and inhibit signal from inhibit signal generation means 24.

In the above embodiment, F-signal is an "1" state output signal which generates if the evaluation signal is "1" state when the check pulse is received. B-signal is an "1" state output signal which generates if the evaluation signal is "0" state when the check pulse is received. But, if inhibit signal is "1" state even when the check pulse is received, AND circuits 51b and 51c do not generate "1".

The accumulation value signal generator 52 generates F accumulation signal and B accumulation signal on the basis of F-signals and B-signals send from F/B signal generator 51 according to the value of accumulative F-signals (data associated with Address 18_{HEX} ), sampling times (data associated with Address 16_{HEX} ) and the value of accumulative B-signals (data associated with Address 16_{HEX} ).

The counter 52a counts F-signal. When the counts are identical with the value of accumulative F-signals, the comparator 52b generates an "1" state F accumulation signal. The counter 52e counts B-signal. When the count is identical with a given value of accumulative B-signals, the comparator 52h generates an "1" state B accumulation signal.

Further, the counter 52d counts F-signal and B-signal sent through OR circuit 52c. When the count is identical with a given sampling times, the comparator 52e generates signals to reset counter 52a, 52d and 52g.

For example, if sampling times is set to 10 by setting data associated with Address 16_{HEX} and the value of accumulative F-signals is set to 4 by setting data associated with Address 18 _{HEX} , F accumulation signal turns "1" when more than four F-signals are contained in ten samplings.

The continuous-value signal 53 generates F continuous-value signal and B continuous-value signal on the basis of F-signals and B-signals according to the continuous-value of F-signal (data associated with Address 12 _{HEX} ) and the continuous-value of B-signal (data associated with Address 14 _{HEX} ).

The counter 53a, which counts F-signal, is reset when receiving B-signal to obtain the continuous-value of F-signals. When the count is identical with a given continuous-value of F-signals, the comparator 53b generates an "1" state F continuous-value signal. The counter 53c, which counts B-signal, is reset when receiving F-signal to obtain the continuous-value of B-signals. When the count is identical with a given continuous-value of B-signals, the comparator 53d generates an "1" state B continuous-value signal.

The select circuit 54 consists of selectors 54a, 54b and 54c, which select and generate F accumulation signal, B accumulation signal, F continuous-value signal and B continuous-value signal. Each operation of selectors 54a, 54b and 54c are based on select signal indicative of decision mode in ON time control shown in Fig. 3 (3). Select signals "00", "01", "10" and "11" indicate "F-signal continuous-valued decision mode", "F-signal accumulating decision mode", "B-signal continuous-valued decision mode" and "B-signal accumulating decision mode".

UP/DO/RE signal generator contains selector 55a, OR circuits 55b and 55c and AND circuit 55e and 55f and generates UP signal for increment control, DO signal for decrement control and RE signal for reset control.

Fig. 4 (6) shows an example of decision means 60 for OFF time control in the above embodiment.

The decision means 60 for OFF time control has a configuration similar with the decision means 50 for ON time control, except for its elements numbered with 60s instead of 50s.

In the above configurations, each desired signals for ON time control and OFF time control can be provided independently to increment, decrement and reset its time to initial condition through a single hardware (decision means 25).

Fig. 4 (7) shows the ON/OFF time calculation means 30 in the above embodiment consists of the ON time calculation circuit 70 and the OFF time calculation circuit 80.

Fig. 4 (8) is a concrete example of the ON time calculation circuit 70 in the above embodiment.

Based on UP signal, the selector 71 selects the data on the increment or the data on the decrement of ON time. In short, the selector 71 provides data on the increment of ON time when the UP signal is "1" state, and data on the decrement of ON time when the UP signal is "0" state.

The increment of ON time is set by setting data associated with Address 08_{HEX} , and the decrement of ON time is set by setting data associated with Address 0A .

ALU 72 adds a given increment to a present ON time when UP signal is "1" state, and subtracts a given decrement from a present ON time when DO signal is "1" state.

The selector 23 selects and generates one out of the data sent from ALU 72, data on the lower limit associated with Address 0E _{HEX} and the upper limit associated with Address 0C .

The subtracter 74a subtracts a given decrement from a present ON time, and sends the difference data to the comparator 74. The adder 75a adds a given decrement to a present ON time, and sends the sum data to the comparator 75.

The comparator 74 compares the difference data with data on the lower limit and generates "1" when the former is smaller than the latter. The AND circuit 77c runs AND operation on DO signal and the signal sent from the comparator 74. The AND circuit 77d runs AND operation on UP signal and the signal sent from the comparator 75. This prevents time data larger than data on the upper limit and smaller than data on the lower limit from being sent to pulse generation means 40.

The OR circuit 77a passes a signal (data associated with Address 5E _{HEX} ) inverted by the inverter 77b and RE signal.

The selector 78 provides initial value of ON time (data associated with Address 00_{HEX} ) when receiving signal from OR circuit 77a, and otherwise, data sent from the selector 73.

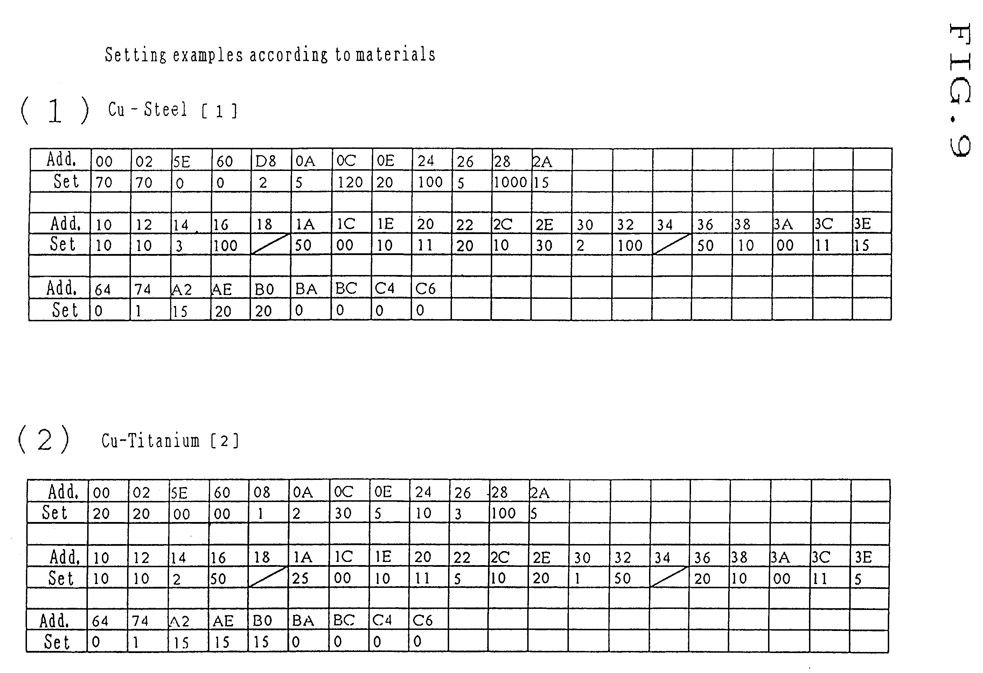

Fig. 9 is a circuit diagram showing an example of the OFF time calculation circuit 80 in the above embodiment.

Basically, the OFF time calculation circuit 80 has a configuration similar with the ON time calculation circuit 70, except for its elements numbered with 80s instead of 70s.

In the above configurations, each desired data ON time data and OFF time data can be provided independently through a single hardware (ON/OFF time calculation means 30).

Fig. 4 (10) is a circuit diagram showing an example of pulse generation means 40 in the above embodiment.

The pulse generation means 40 contains counters 41 and 43, comparators 42 and 44, RS flip-flop 45 and inverter 43a.

The counter 41 counts 10 MHz clock pulses. It starts counting at rising edge of an output pulse sent from the RS flip-flop 45 and the count is reset at its falling edge. The comparator 42 sends a reset pulse signal when ON time data (binary signal) sent from ON/OFF time calculation means 30 is identical with a count of the counter 41.

The counter 43 counts 10 MHz clock pulses. It starts counting at falling edge of an output pulse sent from the RS flip-flop 45 and the count is reset at its rising edge. The comparator 44 sends a set pulse signal when OFF time data (binary signal) sent from ON/OFF time calculation means 30 is identical with a count of the counter 43.

The RS flip-flop 45 provides an "1" state output pulse to start ON time when receiving a set pulse signal and provides "0" state output pulse to start OFF time when receiving a reset pulse signal.

In the above configuration, the pulse generation means 40 generates electric machining pulses having ON time and OFF time corresponding to time data sent from ON/OFF time calculation means.

Next paragraph describes operations of the above embodiment.

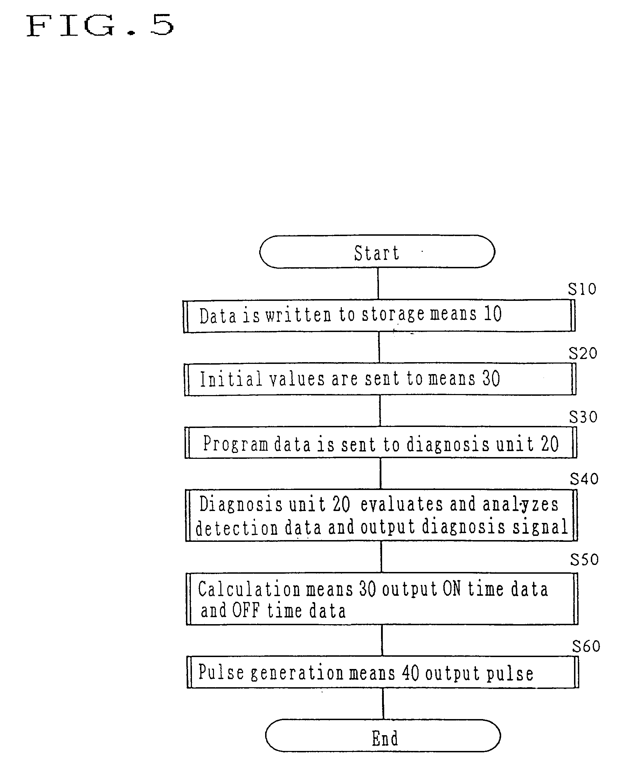

Fig. 5 is a flowchart showing operations of the above embodiment.

In Fig. 5, initial value of ON time and OFF time and program data according to machining requirements are written into registers of storage means 10 (S10), the initial value and program data is sent to ON/OFF calculation means 30 (S20), and the program data is sent to diagnosis unit 20 (S30). Then detection data is entered into the diagnosis unit 20to diagnose machining state according to program data, diagnosis signal thus generated is sent to ON/OFF time calculation means 30 (S40), ON/OFF time calculation means 30 control the data of ON time and OFF time on the basis of the diagnosis signal according to program data to send the time data to pulse generation means 40 (S50). Pulse generation means 40 generates electric discharge pulses according to according to ON time data and OFF time data (S60).

In view of operations, the above embodiment is different from prior art shown in Fig. 10 (2) and (2) as follows.
1. Program data is used according to machining requirements.
2. Machining state is diagnosed program data.
3. ON time data and OFF time data are controlled according to program data on the basis of the resultant diagnosis signal.
4. Program data may be changed if necessary.

These points are also features of this invention.

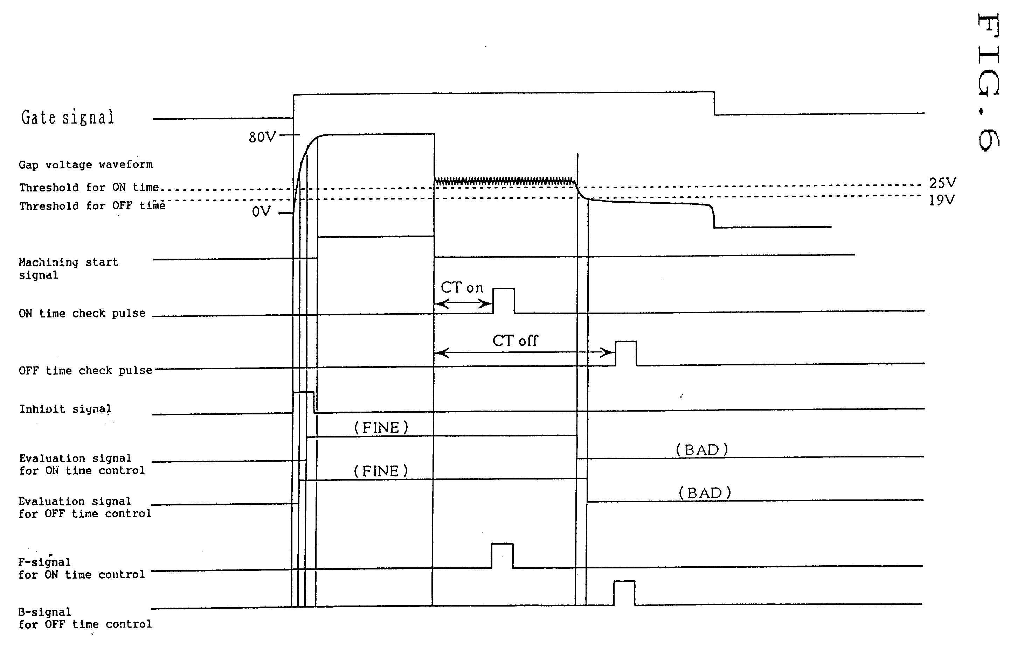

Fig. 6 is a time chart which shows a process of electric discharge machining as an example in the above embodiment covering generation of check pulse, generation of inhibit signal and generation of F-signal and B-signal inside decision means 25.

In this time chart, program data shown in Fig. 3 (4) is set to given values. A gap voltage signal through Port A is selected as detection data for both of ON time control and OFF time control and thresholds for ON time control and OFF time control are set to 25V and 19V respectively. A value larger than the threshold is evaluated as good. ON clamp is used. The inhibit signal having a given duration is provided as illustrated.

The position of check pulse is set to CTon time and CToff time following the machining start signal by setting data associated with addresses 22 _{HEX} and 3E _{HEX} to given values.

Based on the above given setting, the next paragraph describes about processes of generating each signal.

When gate signal sent from pulse generation means 40 rises, a gap voltage signal is also rises. A gap voltage takes a given time to reach no-load voltage level due to the delay of signalling rate inside the circuit. As it is not desirable to decide with evaluation signal for a given duration after the rise of the gate signal, inhibit signal generation means 24 provides inhibit signal. While the inhibit signal is being generated, both F-signal and B-signal are not generated even when a check pulse is received. Therefore, reliability of the diagnosis of electric discharge machining is enhanced.

After elapse of a specified time (CTon time) following the start of electric discharge, check pulse generation means generates check pulse for ON time control.

When the check pulse for ON time control is generated, the threshold for ON time control is compared with the gap voltage inside the thresholds setting means 22 to evaluate a gap voltage. In a time chart shown in Fig. 6, when the check pulse for ON time control is generated, evaluation signal for ON time control is "1" state so that F-signal is provided. Similarly, when the check pulse for OFF time control is generated, evaluation signal for OFF time control is "0" state so that B-signal is provided.

State of electric discharge machining can be evaluated more properly by providing check pulse for ON time control and check pulse for OFF time control independently.

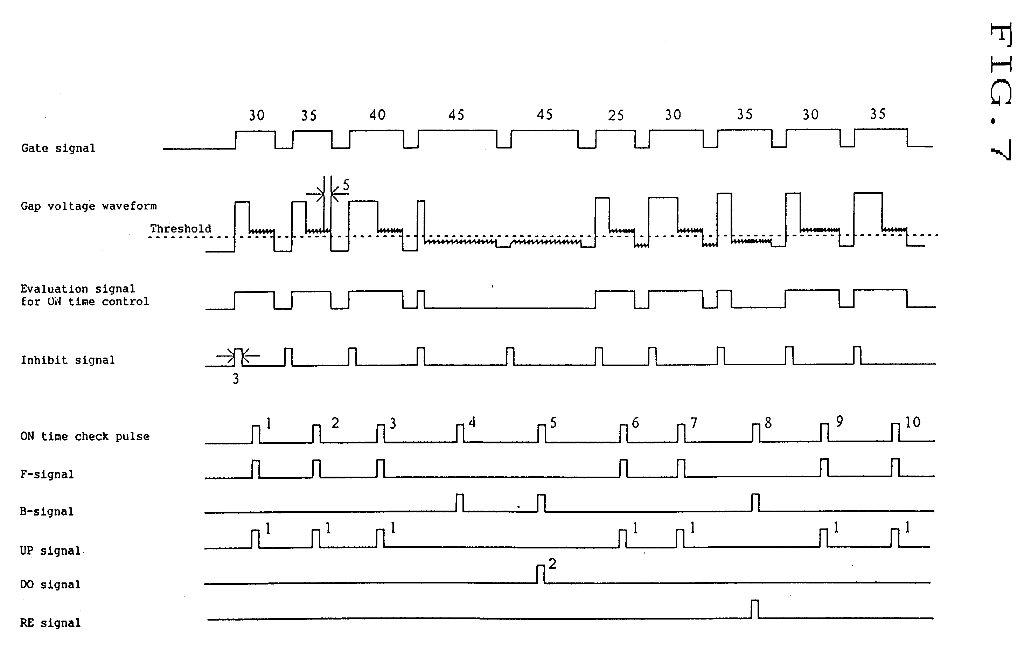

Fig. 7 is a time chart operation of ON time control decision means 50 in electric discharge machining, as an example, in the above embodiment.

In this time chart, program data shown in Fig. 3 (3) and (4) is set to given values. Initial ON time is set to 30µs, the increment and the decrement to 5µs and 20µs, respectively, the time duration of inhibit signal to 3µs, and the upper limit and the lower limit to 100µs and 5µs, respectively.

Further, a gap voltage is selected as detection data , the inhibit signal having a given duration is provided as illustrated and a value larger than the threshold is evaluated as good, similarly with Fig. 6. "ON time increment, decrement and reset mode" is selected as the control mode. "F-signal continuous-valued decision mode" is selected in increment control, "B-signal continuous-valued decision mode" is selected in decrement control and "B-signal accumulating decision mode" is selected in reset mode.

Also, with data associated with addresses 12_{HEX} , 14_{HEX} 16 _{HEX} and 1A _{HEX} to given values, continuous-value of F-signal is set to 1, continuous-value of B-signal to 1, sampling times to 10, and value of accumulative B-signals to 3.

Consequently, if a gap voltage is higher than the threshold when check pulse is generated, F-signal is generated and UP signal is generated with every generation of the F-signal. If a gap voltage is lower than the threshold when check pulse is generated, B-signal is generated and DO signal is generated with every generation of the B-signal. Additionally, when B-signal is generated 3 times in 10 samplings, RE signal is generated.

Fig. 7 shows an example of the ON time control, which similarly applies to the OFF time control.

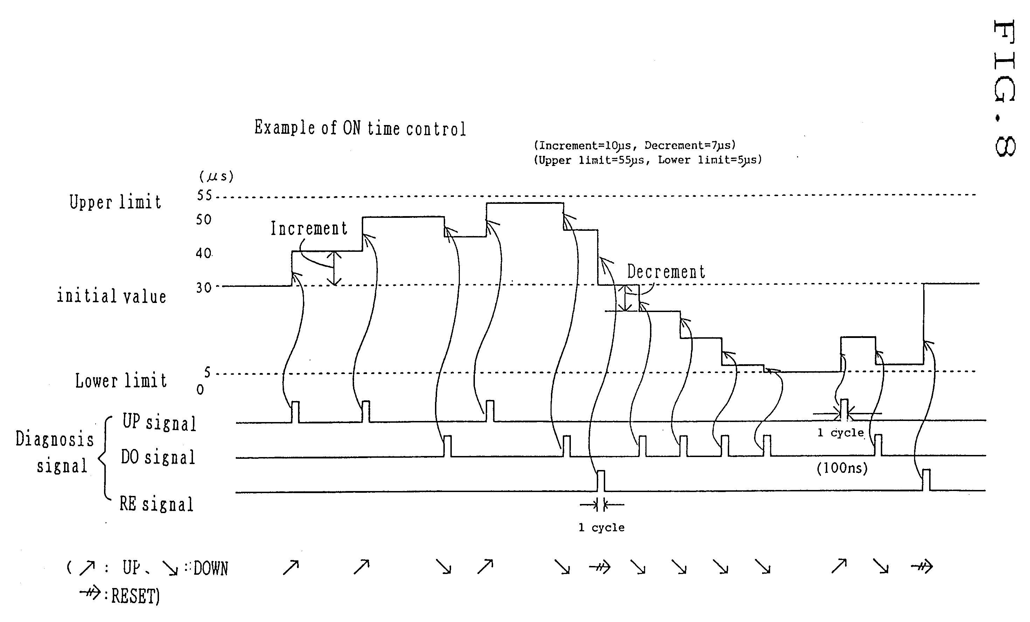

Fig. 8 is a time chart showing an example of the ON time control by ON/OFF time calculation means 30 in the above embodiment. According to program data shown in Fig. 3 (1), the increment is set to 10us, the decrement to 7µs the upper limit to 55µs and the lower limit to 5µs in view of ON time control.

Consequently, when UP signal is generated, the increment of 10µs is added to the present ON time. When DO signal is generated, the decrement of 7µs is subtracted from the present ON time. When RE signal is generated, ON time is reset to initial condition. Also ON time iS set to the lower limit when the difference is lower than the lower limit.

Fig. 8 shows an example of the ON time control, which similarly applies to the OFF time control.

Fig. 9 illustrates an example of program data settings, which implement two logic circuits for pulse width control shown in Fig. 2.

Fig. 9 (1) shows an example of program data settings required to implement the logic circuit "1" (logic circuit for copper-steel machining), and Fig. 9 (2) shows an example of program data settings required to implement the logic circuit "2" (logic circuit for copper-titanium machining).

In Fig. 9, "Address" is an address which is associated with program data and expressed with a hexadecimal digit. "Set" is content of data which is associated with address and expressed with a decimal digit, time is 100ns per data, the number of times is one per data, and the threshold of one data corresponds to 1V. A gap voltage signal is provided through Port A as detection data.

In logic circuit for copper-steel machining shown in Fig. 9 (1), for instance, initial ON time is set 7us, initial OFF time is set to 7, both ON time control and OFF time control to "Existence", the increment of ON time to 200ns and the increment of OFF time to 500ns.

In logic circuit for copper-titanium machining shown in Fig. 9 (2), setting is made as well.

Although definite set-up values are not indicated, setting of program data necessary to implement other logic circuit such as the logic circuit for the copper tungsten-steel machining can be made as well.

Fig. 9 (1) and (2) show examples of program data setting required to implement two logic circuit (1) and (2), but multiple logic circuits are not integrated into a single pulse generator 2. In short, one pulse generator 2 contains a single hardware, which functions similarly with the logic circuit "1", logic circuit "2" or other logic circuit according to setting of program data. Needless to say, it operates similarly with a same logic circuit when program data is maintained to same values.

As it is apparent from the illustration, the types of pulse control according to parameters (machining requirements) may be added by adding program data and its table. Thus, in spite of a single hardware configuration, the above embodiment offers effects of numerous logic circuits.

Therefore, the above embodiment may be applied to a different machining method by just installing one external hardware of control logic circuit (LSI) for pulse control and multiple circuits different in hardware configuration are not required. Further, it provides optimum pulse control according to materials of the electrode and workpiece or fluid flushing state to improve the machining rate.

In conventional device, when machining state is not good, OFF time is extended holding ON time to initial condition and then the ON time is shortened when the OFF time reaches the upper limit.

In short, the conventional system controls unfavorable machining state first by extending OFF time only and then by shortening ON time only when OFF time reaches the upper limit. ON the other hand, in the embodiment shown in Fig. 9, ON time and OFF time are controlled independently so that both can be controlled alternately or simultaneously, enabling more appropriate pulse control.

The storage means 10 may store program data which is modified when a machining requirement is changed during machining, as well as the program data described above. For instance, if the NC machining program is programmed so that a machining requirement can be changed when a specified block of the machining program ends, new program data according to changed machining requirement is stored in storage means 10. With the process of machining, NC detects a machining depth, fluid flushing state, etc. and changes a machining requirement properly according to the detected parameters and new program data according to changed machining requirement is stored in storage means 10. When operator modifies a machining requirement himself in the process of machining, new program data according to changed machining requirement is stored in storage means 10. Further, when a diagnosis result requires extension of OFF time continuously, the virtual machining requirements may not match the diagnosis results. In this case, program data may be modified by feeding back the diagnosis results to CPU 1, to store new program data into storage means 10. This feedback may be done with standard feedback control or fuzzy control.

Although, the above embodiment relates to electric machining, this invention, may apply to pulse generator in other applications such as laser machining and motor control.

The next paragraph describes the embodiment to control peak current Ip additionally.

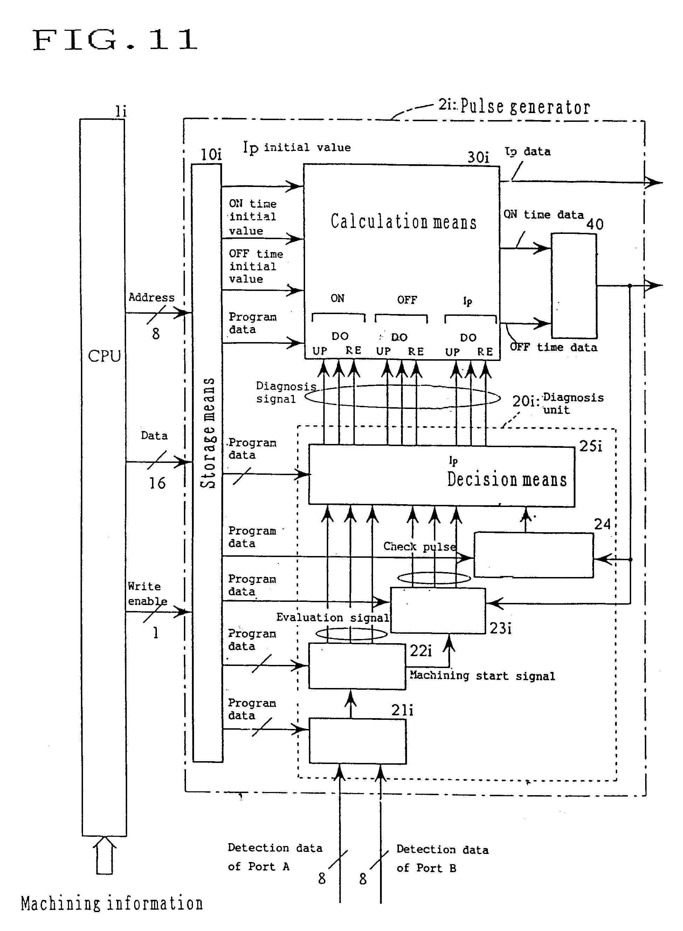

Fig. 11 is a block diagram showing the embodiment which adds a function to control peak current Ip in electric discharge machining to the embodiment shown in Fig. 1.

In Fig, 11 and subsequent figures, "i" suffixed to a code indicates that function to control peak current Ip is provided, and elements expressed with a code suffixed with "i" are same as those not suffixed with "i" in respect ON time control and OFF time control.

The pulse generator 2i is basically same as the pulse generator 2 but different in respect that it is provided with an additional function to control peak current Ip. Storage means 10i provides initial value of peak current Ip, and the diagnosis unit 20i provides the diagnosis signal for Ip control. The calculation means 30i contains the logic circuit for pulse control to change Ip data as well as ON time data and OFF time data. Pulse generation means 40 which generates electric machining pulses successively is same as that shown in Fig. 1.

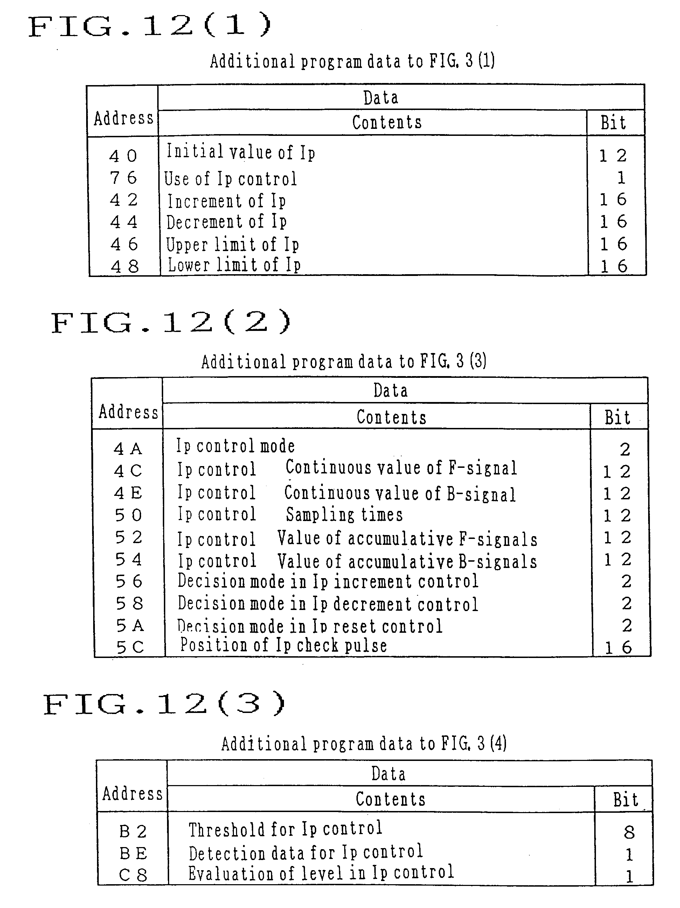

The pulse generator 2i receives address, data and write enable signal from CPU 1i. Examples of the address and program data are shown in Fig. 3 and Fig. 12. Fig. 12 (1), (2) and (3) show examples of additional program data to control Ip.

Storage means 10i comprise multiple registers which store initial condition of On time, OFF time and Ip and program data from CPU 1i when receiving write enable signal.

The diagnosis unit 20i is provided with detection data selection means 21i, threshold setting means 22i, check pulse generation means 23i, inhibit signal generation means 24 and decision means 25i.

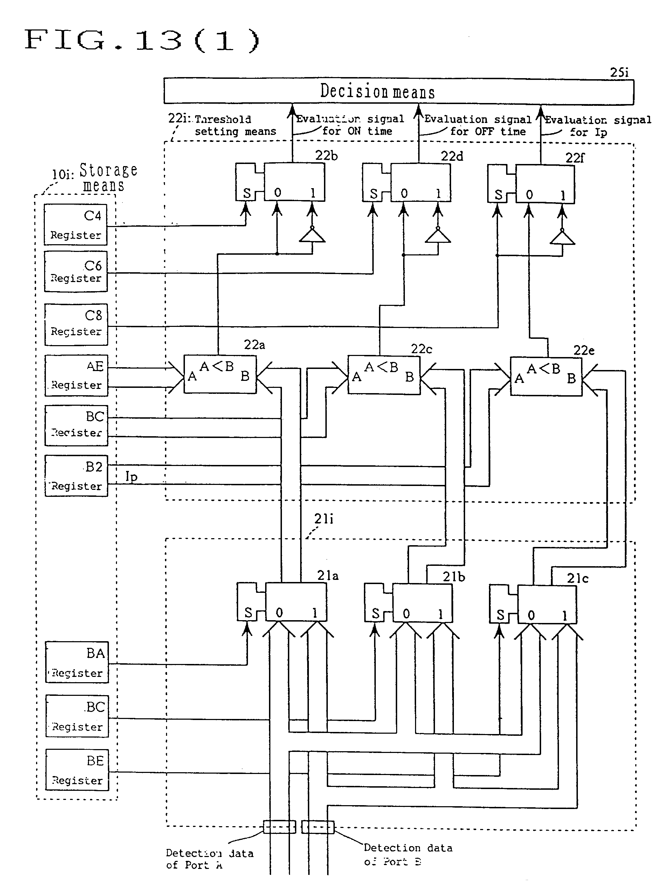

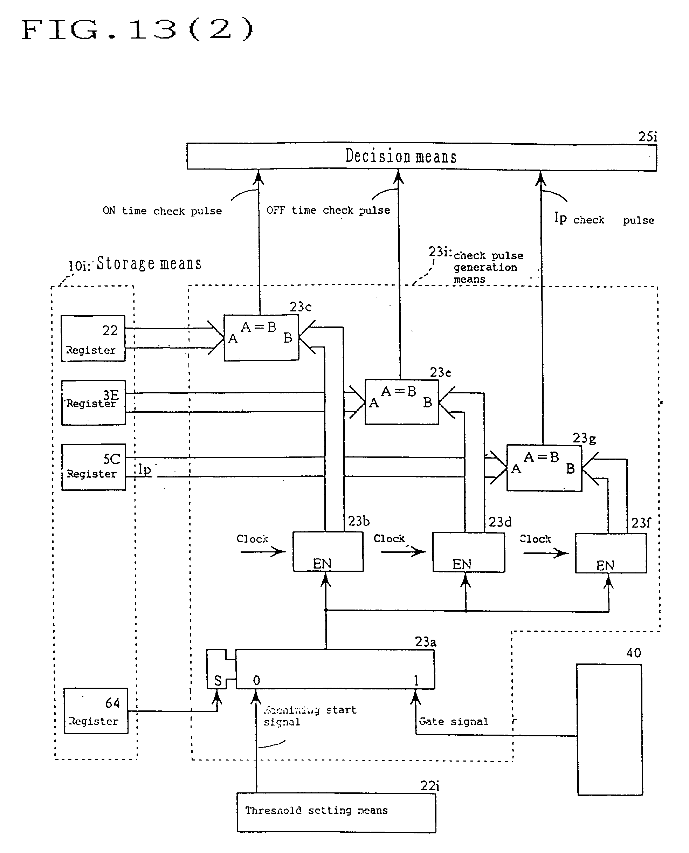

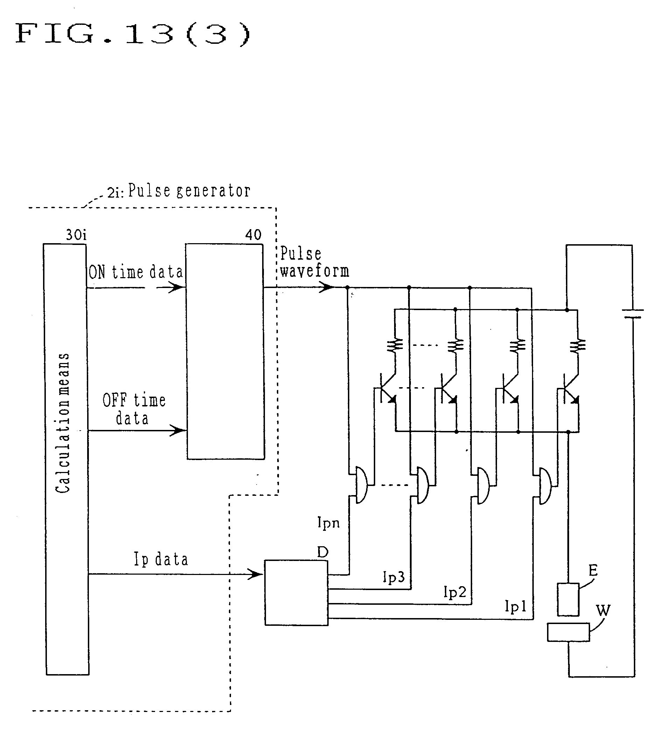

Detection data selection means 21i selects one of multiple detection data entered from outside of the pulse generator 2i. The detection data shows the information on machining state. The concrete example is shown in Fig. 13 (1).

Threshold setting means 22i set a threshold (detection criterion value) of detection data selected as above and provide evaluation signal which indicates good (or no good) when detection data is larger than the threshold. The concrete example is shown in Fig. 13 (1).

Check pulse generation means 23i control timing from a given position, for example, rising edge of gate signal to positions where ON time check pulse, OFF time check pulse and Ip check pulse are generated respectively so as to generate check pulses which show positions for checking. The concrete example is shown in Fig. 13 (2).

Decision means 25i generate diagnosis signals for ON time control and OFF time control independently indicating diagnosis results based on evaluation signal, check pulse and inhibit signal.

In the above embodiment, all of detection data selected by detection data selection means 21i, threshold set by threshold setting means 22i, the duration of inhibit set by inhibit signal generation means 24, check pulse generation timing set by check pulse generation means 23i, diagnosis signal by decision means 25i and data of ON time and OFF time and Ip provided by calculation means 30i are programmable.

In Fig. 12 (1), program data associated with Address 40_{HEX} is the initial value of peak current Ip. This initial value is fixed to a 12-bit digit. Other program data covers presence or absence, the increment, the decrement, the upper limit and the lower limit for Ip control. For instance, data associated with Address 42 _{HEX} is the increment of Ip which is fixed to a 16-bit digit. 1-bit data associated with Address 76 _{HEX} is data to set presence or absence of Ip control. Setting the bit to "0" indicates use of peak current Ip control, while setting the bit to "1" indicates non-use of the Ip control. Other program data is also set as well.

Fig. 12 (2) and (3) are examples of program data transferred to the diagnosis unit 20i from CPU 1i through the storage means 10i in the above embodiment.

Program data concerning Ip control shown in Fig. 12 (2) is provided to set control mode, continuous-value of F-signal, continuous-value of B-signal, sampling times in accumulated value decision mode, value of accumulative F-signals, value of accumulative B-signals, decision mode in the increment control, decision mode in the decrement control, decision mode in the reset control and check pulse position.

Program data concerning Ip control shown in Fig. 12 (3) is provided to select detection data and set a threshold and the evaluation of detection data larger than the threshold. Settings in Fig. 12 (3) are basically same as those in Fig. 3 (4).

Fig. 13 (1) is a circuit diagram showing an example of detection data selection means 21i and threshold setting means 22i which control peak current Ip additionally in the above embodiment.

Detection data selection means 21i is the detection data selection means 21 provided with the selector 21c additionally. The selector 21c selects and provides detection data at Port A or Port B for Ip control according to data (select signal) associated with Address BE _{HEX} in the program data shown in Fig. 12 (3).

Port A and B are input terminals which receive detection data indicative of machining state.

Threshold setting means 22i is the threshold setting means 22 provided with the comparator 22e and the selector 22f additionally. The comparator 22e compares detection data (in the above embodiment, gap current) sent from the detection data selection means 21i with a threshold (data associated with Address B2_{HEX} ) for Ip control and then provides "1" when value of the detection data is larger than the threshold. The selector 22f provides an "1" state evaluation signal indicative of good or a "0" state evaluation signal indicative of no good according to data associated with Address C8_{HEX} when gap current is larger than a threshold for Ip control.

Fig. 13 (2) is a circuit diagram showing an example of check pulse generation means 23i which control peak current Ip additionally in the above embodiment.

Check pulse generation means 23i is the check pulse generation means 23 provided with the counter 23f and the comparator 23g additionally.

The comparator 23g provides the check pulse for Ip control when the count of the counter 23f becomes identical with position data (data associated with Address 5C _{HEX} ) of the check pulse for Ip control.

The decision means 25i consists of ON time control decision means 50, OFF time control decision means 60 and Ip control decision means (not illustrated), which has a circuit configuration same as that of ON time control decision means 50.

Calculation means 30i consists of ON time calculation circuit 70, OFF time calculation circuit 80 and Ip calculation means (not illustrated), which has a circuit configuration same as that of ON time calculation circuit 70.

Fig. 13 (3) shows an example of the switching circuit which forms electrical discharge pulse on the basis of pulse transmitted from pulse generator 2i and Ip data.

In short, this circuit contain the decoder D which decodes Ip data, multiple AND circuits which receives one of signals provided by the decoder D, i.e. Ip1, Ip2, Ip3, ... Ipn signals and pulse waveform signal, transistor which are turned ON with signals received from AND circuits, and one resistor which are connected to the collector of the transistor. Series circuit each consisting of one transistor one resistor are connected in parallel each other and connected to series with the electric discharge loop. The value of above resistors are specified according to associated Ip signals to restrict the value of Ip.

The next paragraph describes operation of the embodiment to control the peak current Ip additionally (embodiment shown in Fig. 11 through Fig. 13).

The embodiment is basically same as that shown in the flowchart of Fig. 5, except that Ip data is also sent to the pulse generation means 40 in addition to ON time data and OFF time data in S50 of Fig. 5. And the pulse generation means 40 generate the pulse according to ON time data, OFF time data and Ip data to control the Ip value by means of switching circuit shown in Fig. 13 (3).

An example of ON time control shown in Fig. 8 is similarly available with the embodiment for controlling the peak current Ip additionally.

## Claims

1. A method for generating a train of successive pulses for effecting a process, wherein a processing means (1) stores a plurality of sets of pulse generating conditions and sets one of the plurality of sets of pulse generating conditions each time a set of process information required for carrying out said process is received, and wherein a detector generates a detection data signal indicative of the condition of at least one characteristic of the process to which said pulses are applied, characterized by the steps of:
(i) storing a plurality of sets of initial ON time values, initial OFF time values and program data including diagnostic criteria for processing said detection data signal and ON time/OFF time calculation criteria;
(ii) inputting a set of the process information required for carrying out said process to said processing means;
(iii) outputting one of the plurality of sets of initial ON time values, initial OFF time values and program data from said processing means, to a pulse generating device (2);
(iv) generating a pulse having an ON time set in accordance with said initial ON time value and an OFF time set in accordance with said initial OFF time value;
(v) providing said detection data signal to said pulse generating device;
(vi) processing said detection data signal in accordance with said program data including said diagnostic criteria to thereby generate a diagnostic signal;
(vii) varying the duration of ON time from said initial ON time value or the duration of OFF time from said initial OFF time value responsive to said diagnostic signal using said program data including said ON time/OFF time calculation criteria; and
(viii) generating a pulse in accordance with varied said ON time duration and said OFF time duration.

2. A method as claimed in Claim 1, wherein said step (v) comprises the step of providing at least two detection data signals indicative of the condition of at least two characteristics of the process to which said pulses are applied and selecting at least one of said detection data signals.

3. A method as claimed in Claim 2, wherein said step (vi) comprises the steps of
generating an evaluation result by comparing said at least one detection data signal with a threshold set in accordance with said diagnostic criteria;
reading said evaluation result at a time determined in accordance with said diagnostic criteria; and
processing said evaluation result in accordance with said diagnostic criteria to generate said diagnostic signal.

4. A method as claimed in any one of the preceding claims, wherein said process information relates to electroerosion machining conditions and said step of inputting a set of the process information comprises the step of inputting one or more machining parameters from the group consisting of: the method of machining used, the material used as a workpiece, the material used as a tool electrode, the type of flushing used, the type of fluid used, the desired material removal rate, the desired electrode wear rate, and the desired surface roughness.

5. A method as claimed in Claim 3, wherein said program data for each of said evaluation results causes said step of processing said evaluation result to be performed by counting either the continuous number of evaluation results which are desirable, or the continuous number of evaluation results which are undesirable, or the number of accumulated evaluation results which are desirable, or the number of accumulated evaluation results which are undesirable.

6. A method as claimed in Claim 4, wherein said detection data signal comprises a signal indicative of current across a gap formed between a tool electrode and a workpiece and a signal of the voltage across said gap.

7. A method as claimed in Claim 4 or Claim 6,
wherein said step (i) comprises the step of storing a plurality of sets of initial peak current values and program data including peak current calculation criteria;
wherein said step (iii) comprises the step of outputting one of the plurality of sets of initial peak current values and program data from said processing means to said pulse generating device;
wherein said step (iv) comprises the step of allowing current having the magnitude of peak current set in accordance with said initial peak current value to pass across a gap formed between said tool electrode and said workpiece during each ON time of said pulses;
wherein said step (vii) comprises the step of varying the magnitude of peak current responsive to said diagnostic signal using said program data including said peak current calculation criteria; and
wherein said step (viii) comprises the step of allowing current having the varied magnitude of peak current to pass across said gap during each ON time of said pulses.

8. A pulse generating apparatus comprising a pulse generating device (2) for generating a train of successive pulses having an ON time and an OFF time, said pulses being applied to effect a process, a processing means (1) having means for storing a plurality of sets of initial ON time values, initial OFF time values and means for providing one of the plurality sets of initial ON time values and initial OFF time values each time a set of process information required for carrying out the process is received, and a detector for generating a detection data signal indicative of the condition of at least one characteristic of the process to which said pulses are applied, characterised in that:
said processing means further comprises means for storing a plurality of sets of program data including diagnostic criteria for processing said detection data signal and ON time/OFF time calculation criteria and means for providing one of the plurality of sets of program data each time a set of the process information is received, and wherein said pulse generating device comprises:
means (10) for storing one of the plurality of sets of initial ON time values, initial OFF time values and program data from said processing means;
programmable means (20) for processing said detection data signal in accordance with said program data, including said diagnostic criteria, to thereby generate a diagnostic signal;
programmable means (30), responsive to said diagnostic signal, for varying the duration of said ON time from said initial ON time value and/or the duration of said OFF time from said initial OFF time value in accordance with said program data, including said ON time/OFF time calculation criteria; and
pulse generating means (40), responsive to said programmable means for varying ON time and OFF time, for generating a pulse having an ON time and an OFF time.

9. A pulse generating apparatus as claimed in Claim 8, wherein said programmable means for processing said detection data signal further comprises:
detection data selecting means (21) for selecting, in accordance with said diagnostic criteria, at least one signal of detection data out of a plurality of detection data signals, each being indicative of the condition of a characteristic of the process to which said pulses are applied;
threshold setting means (22) for generating an evaluation result by comparing the selected signal of detection data with a threshold set in accordance with said diagnostic criteria;
check pulse generating means (23) for generating a check pulse at the time set in accordance with said diagnostic criteria;
inhibit signal generating means (24) for generating an inhibit signal during the time set in accordance with said diagnostic criteria; and
further processing means (25) for generating said diagnostic signal by reading said evaluation result at a time determined by said check pulse and said inhibit signal and processing said evaluation result in accordance with said diagnostic criteria.

10. A pulse generating apparatus as claimed in Claim 9, wherein said pulse generating means (40) comprises means for generating a train of successive pulses for effecting an electroerosion machining on a workpiece using a tool electrode and wherein said process information relates to electroerosion machining conditions and is selected from the group consisting of: the method of machining used, the material used as a workpiece, the material used as a tool electrode, the type of flushing used, the type of fluid used, the desired material removal rate, the desired electrode wear rate, and the desired surface roughness.

11. A pulse generating apparatus as claimed in Claim 9 or Claim 10, wherein said further processing means is responsive to said program for each of said evaluation results to generate said diagnostic signal by counting either in a first mode the continuous number of evaluation results which are desirable, in a second mode the continuous number of evaluation results which are undesirable, in a third mode the number of accumulated evaluation results which are desirable, or in a fourth mode the number of accumulated evaluation results which are undesirable.

12. A pulse generating apparatus as claimed in any one of Claims 9 to 11, wherein said detection data signal comprises a signal indicative of current across a gap formed between said tool electrode and said workpiece and a signal of the voltage across said gap.

13. A pulse generating apparatus as claimed in any one of Claims 9 to 12,
wherein said processing means comprises means for storing a plurality of sets of initial peak current values and program data including peak current calculation criteria; and
wherein said pulse generating device further comprises;
means (10) for storing one of the plurality of sets of initial peak current values and program data including peak current calculation criteria from said setting and processing device;
programmable means (30), responsive to said diagnostic signal, for varying the magnitude of peak current from said initial peak current value in accordance with said program data, including said peak current calculation criteria; and
pulse generating means (40), responsive to said programmable means for varying the magnitude of peak current, for allowing current having the varied magnitude of peak current to pass across said gap during each ON time of said pulses.

## Patentansprüche

1. Verfahren zum Erzeugen einer Kette aufeinanderfolgender Impulse zum Bewerkstelligen eines Prozesses, bei dem ein Verarbeitungsmittel (1) eine Vielzahl von Sätzen von Impulserzeugsbedingungen speichert und einen der Vielzahl von Sätzen von Impulserzeugungsbedingungen jedes Mal festsetzt, wenn ein Satz der zum Ausführen des Prozesses erforderlichen Prozeßinformation erhalten wird, und bei dem ein Detektor ein Nachweisdatensignal erzeugt, das die Bedingung wenigstens einer Charakteristik des Prozesses anzeigt, auf die die Impulse angewendet werden, **gekennzeichnet durch** folgende Schritte:
(i) Speichern einer Vielzahl von Sätzen von Anfangseinschaltzeitwerten, Anfangsausschaltzeitwerten und Programmdaten, die Diagnosekriterien zum Verarbeiten des Nachweisdatensignals und Einschaltzeit/Auschaltzeitberechnungskriterien enthalten;
(ii) Eingeben eines Satzes der zum Ausführen des Prozesses erforderlichen Prozeßinformation in das Verarbeitungsmittel;
(iii) Ausgeben eines der Vielzahl von Sätzen der Anfangseinschaltzeitwerte, Anfangsausschaltzeitwerte und Programmdaten aus dem Verarbeitungsmittel an ein Impulserzeugungsgerät (2);
(iv) Erzeugen eines Impulses mit einer entsprechend dem Anfangseinschaltzeitwert festgesetzten Einschaltzeit und einer entsprechend dem Anfangsausschaltzeitwert festgesetzten Ausschaltzeit;
(v) Erzeugen des Nachweisdatensignals für das Pulserzeugungsgerät;
(vi) Verarbeiten des Nachweisdatensignals entsprechend den die Diagnosekriterien enthaltenden Programmdaten, um dadurch ein Diagnosesignal zu erzeugen;
(vii) Variieren der Dauer der Einschaltzeit aus dem Anfangseinschaltzeitwert oder der Dauer der Ausschaltzeit aus dem Anfangsausschaltzeitwert in Abhängigkeit vom Diagnosesignal unter Verwendung der die Einschaltzeit/Ausschaltseitberechnungskriterien enthaltenden Programmdaten; und
(viii) Erzeugen eines Impulses entsprechend der geänderten Einschaltzeitdauer und der geänderten Ausschaltzeitdauer.

2. Verfahren nach Anspruch 1, dadurch gekennzeichnet, daß der Schritt (v) den Schritt aufweist, mindestens zwei Nachweisdatensignale zu erzeugen, die die Bedingung von mindestens zwei Charakteristiken des Prozesses anzeigen, auf die die Impulse angewendet werden und die mindestens eines der Nachweisdatensignale auswählen.

3. Verfahren nach Anspruch 2, dadurch gekennzeichnet, daß der Schritt (vi) folgende Schritte aufweist:
Erzeugen eines Auswertungsergebnisses durch Vergleichen des mindestens einen Nachweisdatensignals mit einer entsprechend den Diagnosekriterien festgesetzten Schwelle;
Lesen des Auswertungsergebnisses zu einer entsprechend den Diagnosekriterien bestimmten Zeit; und
Verarbeiten des Auswertungsergebnisses entsprechend den Diagnosekriterien, um das Diagnosesignal zu erzeugen.

4. Verfahren nach einem der vorhergehenden Ansprüche, dadurch gekennzeichnet, daß sich die Prozeßinformation auf Funkenerosionsbearbeitungsbedingungen bezieht und daß der Schritt, einen Satz der Prozeßinformation einzugeben, den Schritt des Eingebens eines oder mehrerer Bearbeitungsparameter der folgenden Gruppe aufweist:
Das verwendete Bearbeitungsverfahren, das als Werkstück verwendete Material, das als Werkzeugelektrode verwendete Material, die Art der verwendeten Spülung, die Art des verwendeten Fluid, die gewünschte Materialentfernungsrate, die gewünschte Elektrodenhaltbarkeitsrate und die gewünschte Oberflächenrauhigkeit.

5. Verfahren nach Anspruch 3, dadurch gekennzeichnet, daß die Programmdaten für jedes der Auswertungsergebnisse den Schritt der Verarbeitung des Auswertungsergebnisses bewirkt, der durch Zählen entweder einer kontinuierlichen Anzahl erwünschter Auswertungsergebnisse oder der kontinuierlichen Anzahl unerwünschter Auswertungsergebnisse oder der Anzahl angesammelter erwünschter Auswertungsergebnisse oder der Anzahl angesammelter unerwünschter Auswertungsergebnisse durchgeführt werden soll.

6. Verfahren nach Anspruch 4, dadurch gekennzeichnet, daß das Nachweisdatensignal ein Signal, das den Strom über einem zwischen der Werkzeugelektrode und einem Werkstück ausgebildeten Spalt anzeigt, und ein Signal für die Spannung über dem Spalt aufweist.

7. Verfahren nach Anspruch 4 oder 6, dadurch gekennzeichnet, daß der Schritt (i) den Schritt des Speicherns einer Vielzahl von Sätzen von Anfangsspitzenstromwerten und Spitzenstromberechnungskriterien enthaltenden Programmdaten aufweist;
daß der Schritt (iii) den Schritt des Ausgebens eines der Vielzahl der Sätze der Anfangsspitzenstromwerte und der Programmdaten des Verarbeitungsmittels an das Impulserzeugungsgerät aufweist;
daS der Schritt (iv) den Schritt aufweist, der zuläßt, daß der Strom mit der Größe des entsprechend dem Anfangsspitzenstromwert festgesetzten Spitzenstroms den zwischen der Werkzeugelektrode und dem Werkstück ausgebildeten Spalt während jeder Einschaltzeit der Impulse quert,
daß der Schritt (vii) den Schritt aufweist, die Größe des Spitzenstroms in Reaktion auf das Diagnosesignal unter Verwendung der die Spitzenstromberechnungskriterien enthaltenden Programmdaten ändern; und
daß der Schritt (viii) den Schritt aufweist, der zuläßt, daß der Strom mit der geänderten Größe des Spitzenstroms während jeder Einschaltzeit der Impulse über den Spalt quert.

8. Impulserzeugungsvorrichtung mit einem Impulserzeugungsgerät (2) zum Erzeugen einer Kette aufeinanderfolgender Impulse mit einer Einschaltzeit und einer Ausschaltzeit, wobei die Impulse zum Bewerkstelligen eines Prozesses angewendet werden, mit einem Verarbeitungsmittel (1), das ein Mittel zum Speichern einer Vielzahl von Sätzen von Anfangseinschaltzeitwerten, Anfangsausschaltzeitwerten und ein Mittel zum Erzeugen eines der Vielzahl von Sätzen der Anfangseinschaltzeitwerte und Anfangsausschaltzeitwerte jedes Mal, wenn ein Satz einer zum Durchführen des Prozesses erforderlichen Verarbeitungsinformation empfangen wird, aufweist, und mit einem Detektor zum Erzeugen eines Nachweisdatensignals, das die Bedingung mindestens einer Charakteristik des Prozesses anzeigt, auf den die Impulse angewendet werden, dadurch gekennzeichnet, daß
das Verarbeitungsmittel ferner ein Mittel zum Speichern einer Vielzahl von Sätzen von Programmdaten, die Diagnosekriterien zum Verarbeiten des Nachweisdatensignals und Einschaltzeit/Ausschaltzeitberechnungskriterien besitzen, und ein Mittel zum Erzeugen eines der Vielzahl von Sätzen von Programmdaten jedes Mal, wenn ein Satz der Prozeßinformation empfangen wird, aufweist und daß das Impulserzeugungsgerät folgendes aufweist:
Mittel (10) zum Speichern eines der Vielzahl von Sätze von Anfangseinschaltzeitwerten, von Anfangsausschaltzeitwerten und Programmdaten aus dem Verarbeitungsmittel;
programmierbare Mittel (20) zum Verarbeiten des Nachweisdatensignals entsprechend den die Diagnosekriterien enthaltenden Programmdaten, um dadurch ein Diagnosesignal zu erzeugen;
programmierbare Mittel (30), die auf das Diagnosesignal ansprechen, um die Dauer der Einschaltzeit aus dem Anfangseinschaltzeitwert und/oder die Dauer der Ausschaltzeit aus dem Anfangsausschaltzeitwert entsprechend den die Einschaltzeit/Ausschaltzeitberechnungskriterien enthaltenden Programmdaten zu ändern; und
Impulserzeugungsmittel (40), die auf die programmierbaren Mittel zum Ändern der Einschaltzeit und Ausschaltzeit ansprechen und einen Impuls mit einer Einschaltzeit und einer Ausschaltzeit zu erzeugen.

9. Impulserzeugungsvorrichtung nach Anspruch 8, dadurch gekennzeichnet, daß die programmierbaren Mittel zum Verarbeiten des Nachweisdatensignals ferner aufweisen:
Nachweisdatenmittel (21) zum Auswählen mindestens eines Signals der Nachweisdaten entsprechend den Diagnosekriterien aus der Vielzahl von Nachweisdatensignalen, von denen jedes die Bedingung einer Charakteristik des Prozesses anzeigt, auf den die Impulse angewendet werden;
Schwellenfestsetzungsmittel (22) zum Erzeugen eines Auswertungsergebnisses durch Vergleichen des ausgewählten Signals der Nachweisdaten mit einer entsprechend den Diagnosekriterien festgesetzen Schwelle;
Prüfimpulserzeugungsmittel (23) zum Erzeugen eines Prüfimpulses zur entsprechend den Diagnosekriterien festgesetzten Zeit;
Sperrsignalerzeugungsmittel (24) zum Erzeugen eines Sperrsignals während einer entsprechend den Diagnosekriterien festgesetzten Zeit; und
ferner Verarbeitungsmittel (25) zum Erzeugen des Diagnosesignals durch Lesen des Auswertungsergebnisses zu einer durch den Prüfimpuls und das Sperrsignal bestimmten Zeit und Verarbeiten des Auswertungsergebnisses entsprechend den Diagnosekriterien.

10. Impulserzeugungsvorrichtung nach Anspruch 9, dadurch gekennzeichnet, daß die Impulserzeugungsmittel (40) Mittel zum Erzeugen einer Kette von aufeinanderfolgenden Impulsen zum Bewerkstelligen einer Funkenerosionsbearbeitung an einem Werkstück unter Verwendung einer Werkzeugelektrode aufweisen und daß die Prozeßinformation sich auf Funkenerosionsbearbeitungsbedingungen bezieht und aus der Gruppe ausgewählt wurde, die aus folgendem besteht: dem Verfahren der verwendeten Bearbeitung, dem als Werkstück verwendeten Material, dem als Werkzeugelektrode verwendeten Material, der Art der verwendeten Spülung, der Art des verwendeten Fluids, der gewünschten Materialentfernungsrate, der gewünschten Elektrodenhaltbarkeitsrate und der gewünschten Oberflächenrauhigkeit.

11. Impulserzeugungsvorrichtung nach Anspruch 9 oder 10, dadurch gekennzeichnet, daß das weitere Verarbeitungsmittel auf das Programm für jedes der Auswertungsergebnisse anspricht, um das Diagnosesignal durch Zählen entweder in einem ersten Modus der kontinuierlichen Anzahl der gewünschten Auswertungsergebnisse, in einen zweiten Modus der kontinuierlichen Anzahl der unerwünschten Auswertungsergebnisse, in einem dritten Modus der Anzahl der angesammelten erwünschten Auswertungsergebnisse oder in einem vierten Modus der Anzahl der angesammelten unerwünschten Auswertungsergebnisse zu erzeugen.

12. Impulserzeugungsvorrichtung nach einem der Ansprüche 9 bis 11, dadurch gekennzeichnet, daß das Nachweisdatensignal ein Signal, das den Strom über dem zwischen der Werkzeugelektrode und dem Werkstück gebildeten Spalt angibt, und ein Signal der Spannung über dem Spalt aufweist.

13. Impulserzeugungsvorrichtung nach einem der Ansprüche 9 bis 12, dadurch gekennzeichnet, daß das Verarbeitungsmittel ein Mittel zum Speichern einer Vielzahl von Sätzen der Anfangsspitzenstromwerte und die die Spitzenstromberechnungskriterien enthaltenden Programmdaten aufweist; und
daß die Impulserzeugungsvorrichtung ferner folgendes aufweist:
Mittel (10) zum Speichern eines der Vielzahl der Sätze der Anfangsspitzenstromwerte und die die Spitzenstromberechnungskriterien enthaltenden Programmdaten aus der Festsetzungs- und der Verarbeitungsvorrichtung;
programmierbare Mittel (30), die auf das Diagnosesignal zum Ändern der Größe des Spitzenstroms bezüglich der Anfangsspitzenstromwerte entsprechend den die Spitzenstromberechnungskriterien enthaltenden Programmdaten ansprechen; und
Pulserzeugungsmittel (40), die auf die programmierbaren Mittel zum Ändern der Größe des Spitzenstroms ansprechen, um zuzulassen, daß der Strom mit der geänderten Größe des Spitzenstroms während jeder Einschaltzeit der Impulse den Spalt quert.

## Revendications

1. Procédé de génération d'un train d'impulsions successives pour exécuter un processus, dans lequel un moyen de traitement (1) stocke une pluralité de jeux de conditions de génération d'impulsions et établit l'un des jeux de la pluralité de jeux de conditions de génération d'impulsions chaque fois qu'est reçu un jeu d'informations de traitement nécessaires à la réalisation dudit traitement, et dans lequel un détecteur génère un signal de donnée de détection donnant la condition d'au moins une caractéristique du traitement auquel sont appliquées lesdites impulsions, caractérisé par les étapes:
(i) de stockage d'une pluralité de jeux de valeurs initiales des durées d'activation et de désactivation et de données de programme, comprenant des critères de diagnostic pour le traitement desdits signaux de données de détection et des critères de calcul des durées d'activation/désactivation;
(ii) d'application audit moyen de traitement d'un jeu d'informations de traitement nécessaires à la réalisation dudit traitement;
(iii) de sortie vers un dispositif de génération d'impulsions d'un des jeux de la pluralité de jeux de valeurs initiales des durées d'activation et de désactivation et de données de programmes provenant dudit moyen de traitement;
(iv) de génération d'une impulsion dont la durée d'activation est fixée en fonction de ladite valeur initiale de la durée d'activation et la durée de désactivation est fixée en fonction de ladite valeur initiale de la durée de désactivation;
(v) d'application dudit signal de donnée de détection audit dispositif de génération d'impulsions;
(vi) de traitement dudit signal de donnée de détection en fonction desdites données de programme comprenant lesdits critères de diagnostic pour générer ainsi un signal de diagnostic;
(vii) de modification de la durée de la période d'activation par rapport à ladite valeur initiale de la durée d'activation ou de la durée de la période de désactivation par rapport à ladite valeur initiale de la durée de désactivation, en réponse audit signal de diagnostic, à partir de données de programme comprenant lesdits critères de calcul des durées d'activation/désactivation; et
(viii) de génération d'une impulsion en fonction desdites durées modifiées des périodes d'activation et de désactivation.

2. Procédé selon la revendication 1, dans lequel l'étape (v) comporte l'étape de fourniture d'au moins deux signaux de données de détection donnant la condition d'au moins deux caractéristiques du traitement auquel sont appliquées lesdites impulsions, et de sélection d'au moins un desdits signaux de données de détection.

3. Procédé selon la revendication 2, dans lequel l'étape (vi) comporte les étapes de:
- génération d'un résultat d'évaluation par comparaison d'au moins un signal de donnée de détection à un seuil fixé en fonction desdits critères de diagnostic;
- lecture dudit résultat d'évaluation à un moment déterminé en fonction desdits critères de diagnostic; et
- traitement dudit résultat d'évaluation en fonction desdits critères de diagnostic pour générer ledit signal de diagnostic.

4. Procédé selon l'une quelconque des revendications précédentes, dans lequel lesdites informations de traitement se rapportent à des conditions d'usinage par électro-érosion et ladite étape d'application d'un jeu d'informations de traitement comporte l'étape d'application d'un ou plusieurs paramètre(s) d'usinage choisi(s) dans le groupe de paramètres constitué : du procédé d'usinage utilisé, du matériau utilisé comme pièce à usiner, du matériau utilisé comme électrode-outil, du type d'aspersion utilisé, du type de fluide utilisé, du taux d'enlèvement de matière souhaité, du taux d'usure d'électrode souhaité, et de la rugosité de surface souhaitée.

5. Procédé selon la revendication 3, dans lequel ladite donnée de programme associée à chacun desdits résultats d'évaluation provoque l'exécution de ladite étape de traitement dudit résultat d'évaluation par comptage soit du nombre de résultats d'évaluation favorables successifs, soit du nombre de résultats d'évaluation défavorables successifs, soit du nombre de résultats d'évaluation favorables cumulés, soit du nombre de résultats d'évaluation défavorables cumulés.

6. Procédé selon la revendication 4, dans lequel ledit signal de donnée de détection comporte un signal indiquant le courant qui circule dans l'espace intermédiaire entre l'électrode-outil et la pièce à usiner et un signal de tension dans ledit espace.

7. Procédé selon la revendication 4 ou la revendication 6,
dans lequel l'étape (i) comporte l'étape de stockage d'une pluralité de jeux de valeurs initiales de courant de crête et de données de programme comprenant des critères de calcul de courant de crête;
dans lequel l'étape (iii) comporte l'étape de sortie vers ledit dispositif de génération d'impulsions d'un des jeux de la pluralité de jeux de valeurs initiales de courant de crête et de données de programme provenant dudit moyen de traitement;
dans lequel l'étape (iv) comporte l'étape d'autorisation pour le courant de crête dont l'amplitude de courant de crête est fixée en fonction de ladite valeur initiale de courant de crête de circuler dans l'espace intermédiaire entre l'électrode-outil et la pièce à usiner pendant chaque période d'activation desdites impulsions;
dans lequel l'étape (vii) comporte l'étape de modification de l'amplitude du courant de crête en réponse audit signal de diagnostic en utilisant lesdites données de programme comprenant lesdits critères de calcul de courant de crête; et
dans lequel l'étape (viii) comporte l'étape d'autorisation pour le courant de crête dont l'amplitude de courant de crête a été modifiée de circuler dans ledit espace intermédiaire pendant chaque période d'activation desdites impulsions.

8. Appareil de génération d'impulsions comportant un dispositif de génération (2) d'un train d'impulsions successives ayant une période d'activation et une période de désactivation, lesdites impulsions étant appliquées pour exécuter un processus, un moyen de traitement (1) comportant un moyen de stockage d'une pluralité de jeux de valeurs initiales de durées d'activation et de désactivation, et un moyen d'établissement de l'un des jeux de la pluralité de jeux de valeurs initiales de durées d'activation et de désactivation chaque fois qu'est reçu un jeu d'informations de traitement nécessaires à la réalisation du traitement et un détecteur pour générer un signal de donnée de détection donnant la condition d'au moins une caractéristique du traitement auquel sont appliquées lesdites impulsions, caractérisé en ce que:
le moyen de traitement comporte en outre un moyen de stockage d'une pluralité de jeux de données de programme comprenant des critères de diagnostic destinés au traitement du signal de donnée de détection et des critères de calcul des durées d'activation/désactivation, et un moyen d'établissement d'un des jeux de la pluralité de jeux de données de programme chaque fois qu'est reçu un jeu d'informations de traitement, et dans lequel ledit dispositif de génération d'impulsions comporte:
un moyen de stockage (10) d'un jeu de la pluralité de jeux de valeurs initiales des durées d'activation et de désactivation et de données de programme provenant du moyen de traitement;
un moyen programmable (20) de traitement dudit signal de donnée de détection en fonction desdites données de programme comprenant lesdits critères de diagnostic pour générer ainsi un signal de diagnostic;
un moyen programmable (30) de modification, en réponse au signal de diagnostic, de la durée de ladite période d'activation par rapport à la valeur initiale de la durée d'activation et/ou de la durée de ladite période de désactivation par rapport à la valeur initiale de la durée de désactivation en fonction des données de programme comprenant les critères de calcul des durées d'activation/désactivation; et
un moyen de génération d'impulsions (40), en réponse audit moyen programmable de modification des durées d'activation et de désactivation, pour générer une impulsion ayant une période d'activation et une période de désactivation.

9. Appareil de génération d'impulsions selon la revendication 8, dans lequel le moyen programmable de traitement dudit signal de donnée de détection comporte en outre:
un moyen de sélection (21) de données de détection pour sélectionner, en fonction des critères de diagnostic, au moins un signal de donnée de détection parmi une pluralité de signaux de données de détection, chacun indiquant l'état d'une caractéristique du processus auquel sont appliquées les impulsions;
un moyen de fixation de seuil (22) pour générer un résultat d'évaluation en comparant le signal de donnée de détection sélectionné à un seuil fixé en fonction desdits critères de diagnostic;
un moyen de génération (23) d'impulsions de contrôle pour générer une impulsion de contrôle à un moment fixé en fonction desdits critères de diagnostic;
un moyen de génération (24) de signal d'invalidation pour générer un signal d'invalidation pendant une durée fixée en fonction desdits critères de diagnostic; et
un moyen supplémentaire de traitement (25) pour générer ledit signal de diagnostic par lecture dudit résultat d'évaluation à un moment déterminé par ladite impulsion de contrôle et ledit signal d'invalidation, et pour traiter ledit signal d'évaluation en fonction desdits critères de diagnostic.

10. Appareil de génération d'impulsions selon la revendication 9, dans lequel le moyen de génération d'impulsions (40) comporte un moyen de génération d'un train d'impulsions successives pour réaliser un usinage par électro-érosion sur une pièce en utilisant une électrode-outil, et dans lequel les informations de traitement se rapportent aux conditions d'usinage par électro-érosion et sont sélectionnées dans le groupe d'informations constitué: du procédé d'usinage utilisé, du matériau utilisé comme pièce à usiner, du matériau utilisé comme électrode-outil, du type d'aspersion utilisé, du type de fluide utilisé, du taux d'enlèvement de matière souhaité, du taux d'usure d'électrode souhaité, et de la rugosité de surface souhaitée.

11. Appareil de génération d'impulsions selon la revendication 9 ou la revendication 10, dans lequel le moyen supplémentaire de traitement réagit au programme associé à chacun des résultats d'évaluation pour générer le signal de diagnostic par comptage soit, dans un premier mode, du nombre de résultats d'évaluation favorables successifs, soit, dans un second mode, du nombre de résultats d'évaluation défavorables successifs, soit, dans un troisième mode, du nombre de résultats d'évaluation favorables cumulés, soit, dans un quatrième mode, du nombre de résultats d'évaluation défavorables cumulés.

12. Appareil de génération d'impulsions selon l'une quelconque des revendications 9 à 11, dans lequel le signal de donnée de détection comporte un signal indiquant le courant qui circule dans un espace intermédiaire entre l'électrode-outil et la pièce à usiner, et un signal de tension dans ledit espace.

13. Appareil de génération d'impulsions selon l'une quelconque des revendications 10 à 12,
dans lequel le moyen de traitement comporte un moyen de stockage d'une pluralité de jeux de valeurs initiales de courant de crête et de données de programme comprenant des critères de calcul de courant de crête; et
dans lequel le dispositif de génération d'impulsions comporte en outre:
un moyen (10) de stockage de l'un des jeux de la pluralité de jeux de valeurs initiales de courant de crête et de données de programme comprenant des critères de calcul de courant de crête provenant du dispositif d'établissement et de traitement;
un moyen programmable (30) réagissant au signal de diagnostic pour modifier l'amplitude du courant de crête en fonction des données de programme comprenant les critères de calcul de courant de crête; et
un moyen de génération d'impulsions (40) réagissant au moyen programmable de modification de l'amplitude du courant de crête, pour autoriser le courant dont l'amplitude de courant de crête a été modifiée à circuler dans l'espace intermédiaire pendant chaque période d'activation des impulsions.
